# EUROPEAN PATENT APPLICATION

(11) **EP 1 494 157 A1**
(43) Date of publication of application: **05.01.2005**
(21) Application number: 04253942.9
(22) Date of filing: 30.06.2004
(51) Int. Cl.: G06F 17/60

(54) **Payment system, payment apparatus, computer program, customer terminal apparatus, and payment method for e-commerce**

(30) Priority: 01.07.2003 JP 2003189757
(71) Applicant: Sony Corporation, Tokyo 141 (JP)
(72) Inventor: Nakashima, Hirofumi, Shinagawa-ku, Tokyo (JP); Hashizume, Naoyoshi, Shinagawa-ku, Tokyo (JP); Anzaki, Tomosuke, Shinagawa-ku, Tokyo (JP); Miyazaki, Tomokazu, Shinagawa-ku, Tokyo (JP)
(74) Representative: Horner, David Richard

(57) **Abstract**

The present invention provides a charging system, a charging apparatus, a computer program, a customer terminal apparatus and a charging method. The charging system includes a business entity apparatus for providing a product, a customer terminal apparatus for receiving the provision of the product, and a charging apparatus for executing charging processing on the customer terminal apparatus on behalf of the business entity apparatus. These apparatuses are each connected to a network. The charging apparatus includes charging plan information generation means, relating means, and charging means. The charging plan information generation means includes a charging plan template. The charging plan information generation means sets charging parameter information. The charging plan information generation means generates charging plan information from the charging plan template and the charging parameter information. The relating means relates the charging plan information with the product. The charging means executes charging processing on the customer terminal apparatus for the product.

## Description

### BACKGROUND OF THE INVENTION

The present invention relates to a computer network system capable of charging on behalf of business entities. More particularly, the invention relates to a charging system, a charging apparatus, a computer program, a customer terminal apparatus, and a charging method.

Recently, the infrastructures for information networks have been developed and consolidated, bringing forth many electronic commerce systems based on the Internet and so on. Among various types of electronic commerce systems, there exists a system (known as a mediation system) of a type in which a charging apparatus charges customers for the fees of commercial products purchased by them, in mediation for business entities (or merchants) which provide these products.

For merchants to sell products, the above-mentioned mediation system requires to register these products with a charging apparatus in advance. The registration requires the information about products and the information about charging. It should be noted that the information about charging is configured by an initial fee system and a cyclic fee system (refer to Patent Document 1 below for example). The technological document information associated herewith includes the following:
Patent Document 1: Japanese Patent Laid-Open No. 2002-163570

However, the related-art technology presents a problem that commercial products cannot be efficiently registered because it is mandatory to set charging information before the registration of commercial products. Especially, in the registration of a plurality of products, charging information must be set to each of the products even if the charging information is the same, thereby lowering the efficiency of registration processing.

### SUMMARY OF THE INVENTION

Embodiments of the present invention provide a new and improved charging system, charging apparatus, computer program, and charging method which are capable of registering commercial products efficiently.

According to the first aspect of the present invention, there is provided a charging system in which a business entity apparatus on the side of business entity for providing a product, a customer terminal apparatus on the side of a customer for receiving the provision of the product, and a charging apparatus for executing charging processing on the customer terminal apparatus on behalf of the business entity apparatus are each connected to a network, the charging apparatus including:
charging plan information generation means having a charging plan template including charging type information for indicating the type of the charge, billing timing information for indicating the timing for billing the charge, and charging cycle information for indicating the cycle of the charge, the charging plan information generation means setting charging parameter information configured by a combination of the charging type information, the billing timing information, and the charging cycle information to generate charging plan information from the charging plan template and the charging parameter information;
relating means for relating the charging plan information with the product as instructed by the business entity apparatus; and
charging means for executing charging processing on the customer terminal apparatus for the product on the basis of the charging plan information related with the product.

According to the second aspect of the present invention, there is provided a charging apparatus connected via a network to a business entity apparatus on the side of a business entity for providing a product and a customer terminal apparatus on the side of a customer for receiving the provision of the product to charge the customer terminal apparatus on behalf of the business entity apparatus, the charging apparatus including:
charging template storage means for storing a charging plan template including charging type information for indicating the type of the charge, billing timing information for indicating the timing for billing the charge, and charging cycle information for indicating the cycle of the charge;
charging plan information generating means for setting, as instructed by the business entity apparatus, charging parameter information configured by a combination of the charging type information, the billing timing information, and the charging cycle information to generate charging plan information from the charging plan template and the charging parameter information;
relating means for relating the charging plan information with the product as instructed by the business entity apparatus; and
charging means for executing charging processing on the customer terminal apparatus for the product on the basis of the charging plan information related with the product.

According to the third aspect of the present invention, there is provided a computer program for making a computer function as a charging apparatus connected via a network to a business entity apparatus on the side of a business entity for providing a product and a customer terminal apparatus on the side of a customer for receiving the provision of the product to charge the customer terminal apparatus on behalf of the business entity apparatus, including the steps'of:
setting, as instructed by the business entity apparatus, charging parameter information configured by a combination of charging type information for indicating the type of the charge, billing timing information for indicating the timing for billing the charge, and charging cycle information for indicating the cycle of the charge;
generating charging plan information from a stored charging plan template and the charging parameter information, the charging plan template including the charging type information, the billing timing information, and the charging cycle information;
relating the charging plan information with the product as instructed by the business entity apparatus; and
executing charging processing on the customer terminal apparatus on the basis of the charging plan information related with the product.

According to the fourth aspect of the present invention, there is provided a customer terminal apparatus connected to a business entity apparatus on the side of a business entity for providing products and a charging apparatus for executing charging on behalf of the business entity apparatus, the customer apparatus being charged by the charging apparatus for the purchase of the products, the customer terminal apparatus including:
purchase means for collectively selecting all of the products related, as instructed by the business entity apparatus, with charging plan information generated by the charging apparatus from a charging plan template including charging type information for indicating the type of the charge, billing timing information for indicating the timing for billing the charge, and charging cycle information for indicating the cycle of the charge and charging parameter information configured by a combination of the charging type information, the billing timing information, and the charging cycle information which are set as instructed by the business entity apparatus and purchasing the selected products.

According to the fifth aspect of the present invention, there is provided a charging method for a charging apparatus connected via a network to a business entity apparatus for providing a product and a customer terminal apparatus for receiving the provision of the product, the charging apparatus executing charging processing on the customer terminal apparatus on behalf of the business entity apparatus, the charging method including the steps of:
setting, as instructed by the business entity apparatus, charging parameter information configured by a combination of charging type information for indicating the type of the charge, billing timing information for indicating the timing for billing the charge, and charging cycle information for indicating the cycle of the charge;
generating charging plan information from a stored charging plan template and the charging parameter information, the charging plan template including the charging type information, the billing timing information, and the charging cycle information;
relating the charging plan information with the product as instructed by the business entity apparatus; and
executing charging processing on the customer terminal apparatus on the basis of the charging plan information related with the product.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a block diagram illustrating a schematic configuration of a charging system practiced as one embodiment of the invention;
FIG. 2 is a block diagram illustrating a schematic configuration of a business entity apparatus according to the present embodiment;
FIG. 3 is a block diagram illustrating a schematic configuration of a customer terminal apparatus according to the present embodiment;
FIG. 4 is a block diagram illustrating a schematic configuration of a charging apparatus practiced as another embodiment of the invention;
FIG. 5 is a diagram illustrating a schematic configuration of a product database according to the present embodiment;
FIG. 6 is a diagram illustrating a schematic configuration of a charging plan template database according to the present embodiment;
FIG. 7 is a diagram illustrating a schematic data structure of member store registration data according to the present embodiment;
FIG. 8 is a diagram illustrating a schematic data structure of merchant registration data according to the present embodiment;
FIG. 9 is a diagram illustrating a schematic configuration of a display screen applied to the above-mentioned charging system;
FIG. 10 is a diagram illustrating a schematic configuration of a display screen applied to the above-mentioned charging system;
FIGS. 11A and 11B are diagrams illustrating the outline of relation information according to the present embodiment;
FIGS. 12A and 12B are diagrams illustrating the outline of business entity unit information according to the present embodiment;
FIG. 13 is a timing chart indicative of the outline of the processing of generating the above-mentioned business entity unit information;
FIG. 14 is a timing chart indicative of the outline of the processing of generating business entity unit information associated with customers according to the present embodiment;
FIG. 15 is a diagram illustrating a schematic configuration of a display screen applied to the above-mentioned charging system;
FIG. 16 is a diagram illustrating another schematic configuration of the above-mentioned display screen;
FIG. 17 is a diagram illustrating the outline of a data structure of customer profile information stored in a customer database according to the present embodiment;
FIG. 18 is a diagram illustrating a schematic configuration of a display screen applied to the above-mentioned charging system;
FIG. 19 is a diagram illustrating a schematic configuration of another display screen applied to the above-mentioned charging system;
FIG. 20 is a diagram illustrating a schematic configuration of still another display screen applied to the above-mentioned charging system;
FIG. 21 is a diagram illustrating a schematic configuration of still another display screen applied to the above-mentioned charging system;
FIG. 22 is a diagram illustrating a schematic configuration of customer management information according to the present embodiment;
FIG. 23 is a timing chart indicative of the outline of customer management information relating processing according to the present embodiment;
FIG. 24 is a diagram illustrating a schematic configuration of a display screen applied to the above-mentioned charging system;
FIG. 25 is a timing chart indicative of the processing of relating products with charging plan information according to the present embodiment;
FIG. 26 is a diagram illustrating a schematic configuration of a display screen applied to the above-mentioned charging system;
FIG. 27 is a diagram illustrating the outline of a data structure of product registration information according to the present embodiment;
FIG. 28 is a diagram illustrating a schematic configuration of a display screen applied to the above-mentioned charging system;
FIG. 29 is a diagram illustrating the outline of a data structure of charging parameter information according to the present embodiment;
FIG. 30 is a diagram illustrating a schematic configuration of a display screen applied to the above-mentioned charging system;
FIG. 31 is a diagram illustrating the outline of a data structure of associated registration information according to the present embodiment;
FIGS. 32A and 32B are diagrams illustrating a schematic configuration of a traded product database according to the present embodiment;
FIG. 33 is a diagram illustrating a schematic configuration of a display screen applied to the above-mentioned charging system;
FIG. 34 is a timing flowchart indicative of schematic operations of product purchase processing according to the present embodiment;
FIG. 35 is a diagram illustrating the outline of a display screen applied to the above-mentioned charging system;
FIG. 36 is a diagram illustrating a data structure of purchase registration information according to the present embodiment; .
FIG. 37 is a diagram illustrating the outline of a display screen applied to the above-mentioned charging system;
FIG. 38 is a diagram illustrating the outline of a data structure of other purchase registration information according to the present embodiment;
FIG. 39 is a diagram illustrating the outline of a data structure of purchase information according to the present embodiment;
FIG. 40 is a diagram illustrating the outline of a display screen applied to the above-mentioned charging system; and
FIG. 41 is a diagram illustrating the outline of vouchers to be generated according to the present embodiment.

### DETAILED DESCRIPTION OF THE PREFERRED EMBODIMENTS

This invention will be described in further detail by way of example with reference to the accompanying drawings. It should be noted that, throughout the following descriptions and the accompanying drawings, similar functions and similar components will be explained only once for the purpose of brevity by denoting them with the same reference numerals.

### Charging System

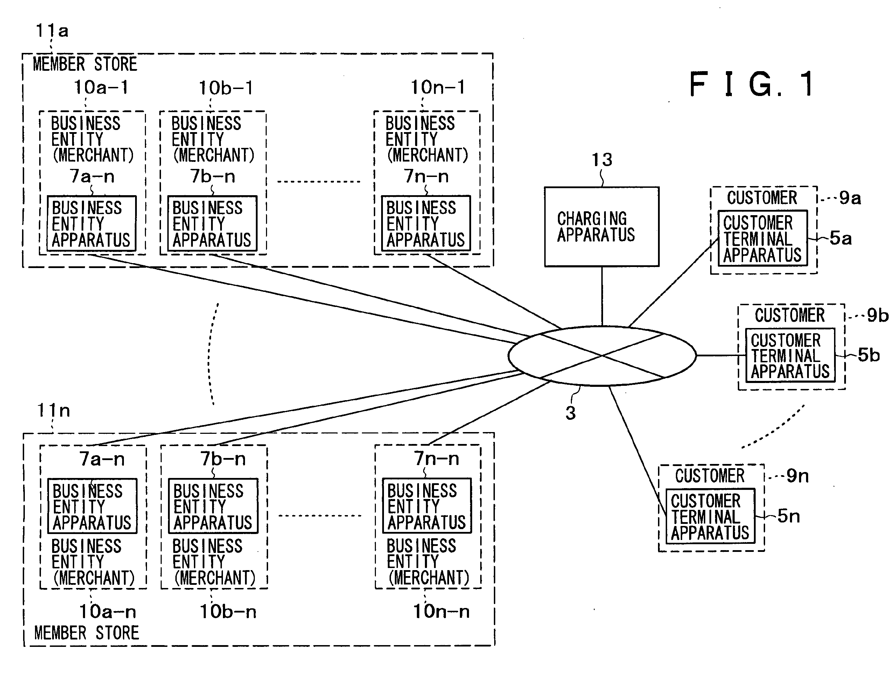

First, referring to FIG. 1, a charging system practiced as one embodiment of the invention will be described. FIG. 1 is block diagram which schematically illustrates this charging system 1.

As shown in FIG. 1, the charging system 1 includes member stores 11 (11a, 11b, ..., 11n) and customers 9 (9a, 9b, ..., 9n).

Each of the above-mentioned member stores 11 (11a, 11b, ..., 11n) has one or more business entities 10 (10a-1, 10b-1, ..., 10n-1), ..., business entities 10 (10a-n, 10b-n, ..., 10n-n).

The business entity 10 belonging to each member store 11 provides commercial products to customers 9. When a request for purchase comes from the customer 9, the business entity 10 sells the specified product to the requesting customer 9. The customer 9 receives the requested product and pays for it.

The business entity 10 (hereafter merchant 10) generically denotes economic activities, a business entity for example. Each merchant 10 has a business entity apparatus 7.

The business entity apparatus 7 installed in the merchant 10 provides products to the customer 9 via a network 3 and has at least the function of a server besides the function of a terminal apparatus.

The member store 11 is configured by one or more merchants 10. For example, the member store 11 has a company organization. The charging system 1, the member stores 11 are first registered for the use of the system and then the merchants 10 are registered. Therefore, the member store 11 is parental to the merchants 10.

The customer 9 can register with the merchant 10 in advance to purchase products from the merchant 10; namely, the customer 9 is a so-called general user.

The customers 9 (9a, 9b, ..., 9n) have customer terminal apparatuses 5 (5a, 5b, ..., 5n) respectively.
The customer terminal apparatus 5 is a computer, a mobile phone, or a portable terminal device, for example.

The above-mentioned customer terminal apparatus 5 accesses the business entity apparatus 7 via the network 3 to execute a customer registration procedure or purchase products for example.

Products are corporeal movables which are commercially traded and further include incorporeals such as computer programs and services such as digital content supply service.

As shown in FIG. 1, the customer terminal apparatuses 5, the business entity apparatuses 7 belonging to the member stores 11, and a charging apparatus 13 are connected to the network 3.

The charging apparatus 13 charges customers 9 who purchased products and generates bills at predetermined time intervals, thereby executing a sequence of settlement processing operations. The charging apparatus 13 executes the sequence of settlement processing operations on behalf of the business entity apparatus 7 which has executed these operations so far.

With the charging system 1 connected to the network 3 such as the Internet, the customer terminal apparatus 5 accesses the business entity apparatus 7 belonging to the merchant 10 for the customer 9 to purchase products from the merchant 10.

The network 3 interconnects the business entity apparatus 7, the charging apparatus 13, and the customer 9. Typically, the network 3 is a public line network such as the Internet but includes closed circuit networks such as WAN, LAN, and IP-VPN. The connection media include both wired and wireless media such as fiber optics cable based on FDDI (Fiber Distributed Data Interface), coaxial or twisted pair cable based on Ethernet (trademark), and wireless media based on IEEE 802.11b. The connection media also include satellite communication networks.

The business entity apparatus 7 can execute online shopping such as virtual malls and sell products via the network 3 under the control of the charging system 1.

Consequently, in response to the access from the customer terminal apparatus 5 belonging to the customer 9, the business entity apparatus 7 provides the catalog information about products for sale for example or purchases specified products.

If products to be provided are digital content for example, the merchant 10 distributes the above-mentioned content via the network 3. This content is transmitted by the business entity apparatus 7 of the merchant 10. If products are corporeal such as television sets, the merchant 10 makes arrangements for the delivery of products.

In the merchant 10, the sale information and the customer information are managed by the charging apparatus 13 on behalf of the merchant 10. The sale information is information about the particular products, the volume of their sale to the customer 9, and the period of their sale. The customer information is information about the products purchased by the customer 9, their volume, and the period of their purchase.

Since the charging processing and so on are executed by the charging apparatus 13 on behalf of the business entity apparatus 7, the merchant 10 is charged for the use of the charging apparatus 13. To be more specific, every time a product is sold, a part of the selling price is collected by the charging apparatus 13 or the business entity apparatus 7 pays a certain amount in a predetermined cycle such as yearly or monthly, for example.

### Business Entity Apparatus 7

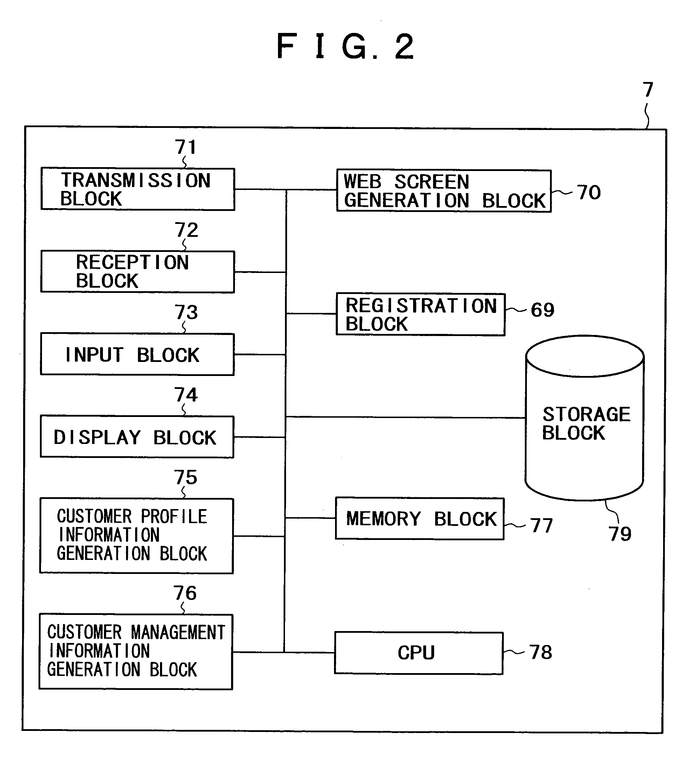

The following describes the business entity apparatus 7 according to the present embodiment with reference to FIG. 2. FIG. 2 is a block diagram illustrating a schematic configuration of this business entity apparatus.

As shown in FIG. 2, the business entity apparatus 7 includes a registration block 69, a Web screen generation block 70, a transmission block 71, a reception block 72, an input block 73, a display block 74, a customer profile information generation block 75, a customer management information generation block 76, a memory block 77, a CPU 78 for controlling each processing operation in the entire apparatus, and a storage block 79.

The business entity apparatus 7 has server capabilities and, in response to the access from the customer terminal apparatus 5, registers the customer 9 and provides a Web screen and so on, for example. The registration of the customer 9 is executed by the registration block 69. The Web screen is provided by the Web screen generation block 70 via the transmission block 71. It should be noted that the registration block 69 processes not only the above-mentioned customer registration, but also product registration, charging plan information registration, member store registration, and merchant 10 registration.

When the above-mentioned customer registration has been completed, a unique customer identification information (or unique customer ID) is issued for the identification of the customer 9. This unique customer ID is issued and managed for each merchant 10 and therefore not shared between the merchants 10.

Consequently, upon registration, the registered customer 9 accesses the business entity apparatus 7 to purchase desired products.

The transmission block 71 sends data to the customer terminal apparatus 5 or the charging apparatus 13 via the network 3. The reception block 72 receives data via the network 3.

The input block 73 is composed of, but not exclusively, a pointing device such as mouse, track ball, track pad, stylus pen, or joy stick, and a keyboard for example through which the merchant 10 gives instructions to the business entity apparatus 7.

The display block 74 displays Web screens processed by the CPU 78 to be displayable. The display block 74 is a television set or a liquid crystal display for example, from which still images, sounds, and moving images are outputted.

The customer profile information generation block 75 generates the customer profile information associated with the registered customer 9. The customer profile information is registered with the charging apparatus 13 to be used by the customer 9 for the purchase of products and the charging or settlement of purchased products. Details of this information will be described later.

The customer management information generation block 76 generates the customer management information associated with the registered customer 9. The customer management information is used for the management of the customer 9 on the side of the merchant 10. The generated customer management information is registered with the charging apparatus 13 as related with the customer profile information.

The customer management information may include information such as the following: 5% discount from the charged amount on the birthday of the customer 9; 5% discount if a particular professional baseball club wins; 5% discount if the customer 9 is a regular customer; and 5% discount in March which is a campaign month, for example. Details of this customer management information will be described later.

The Web screen generation block 70 generates the Web screen data specified by the customer terminal apparatus 5. The generated Web screen data are supplied to the transmission block 71. Consequently, Web screens are displayed on a display block 54 of the customer terminal apparatus 5.

It should be noted that the Web screen generation block 70 according to the present embodiment is also executable if stored in the storage block 79 by a computer program and processed by the CPU 78. Further, the Web screen generation block 70 is executable if connected to the outside of the business entity apparatus 7 as a Web server.

The memory block 77 is a device on which data are read or written. For example, the memory block 77 is based on RAM (Random Access Memory), ROM (Read Only Memory), EEPROM (Electrically Erasable and Programmable ROM), DRAM (Dynamic RAM), SRAM (Static RAM), or SDRAM (Synchronous DRAM).

The storage block 79 is a storage device on which data are read or written. The storage block 79 is based on, but not exclusively, hard disk drive (HDD), DVD-RAM, DVD-ROM, or CD-ROM. The storage block 79 stores the data such as customer registration information registered by the customer 9, for example.

### Customer Terminal Apparatus 5

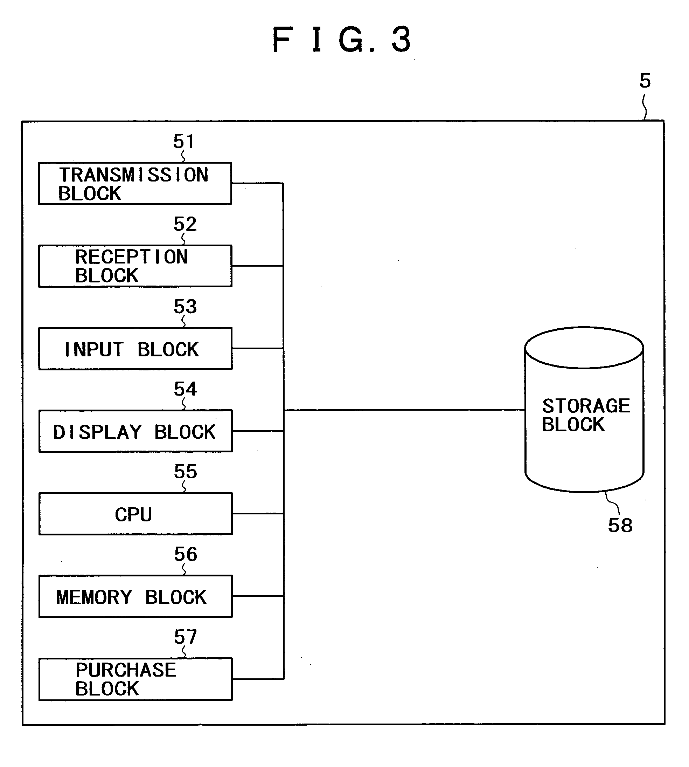

The following describes the customer terminal apparatus 5 according to the present embodiment with reference to FIG. 3. FIG. 3 is a block diagram illustrating a schematic configuration of the customer terminal apparatus 5.

As shown in FIG. 3, the customer terminal apparatus 5 includes a transmission block 51, a reception block 52, an input block 53, a display block 54, a CPU 55 for controlling each component of the entire apparatus, a memory block 56, a purchase block 57, and a storage block 58.

The customer terminal apparatus 5 accesses the business entity apparatus 7 by means of a computer program such as a Web browser stored in the storage block 58. Consequently, the customer terminal apparatus 5 executes customer registration and product purchase application for the business entity apparatus 7.

The transmission block 51 sends data to the business entity apparatus 7 or the charging apparatus 13 via the network 3. The reception block 52 receives data via the network 3.

The input block 53, the display block 54, the memory block 56, and storage block 58 are substantially the same in configuration as the input block 73, the display block 74, the memory block 77, and the storage block 79 of the business entity apparatus 7 respectively, so that their detail description will be skipped.

The purchase block 57 generates purchase registration information when the customer 9 purchases products. In generating purchase registration information, the purchase block 57 sets an all flag for selecting all products associated with one piece of charging plan information. The all flag will be detailed later.

In purchasing a product, charging is settled on the basis of the charging plan information bound to the purchased product. For purchasing a product, the product and its charging plan information must be selected.

When purchasing a plurality of products on the basis of one piece of charging plan information through the purchase block 57, the products may be selected in a lump, thereby realizing quick purchasing. The purchasing processing by the purchase block 57 and the charging plan information will be detailed later.

It should be noted that the purchase block 57 according to the present embodiment is also executable if stored in the storage block 79 by means of a computer program and processed by the CPU 55, for example.

### Charging Apparatus 13

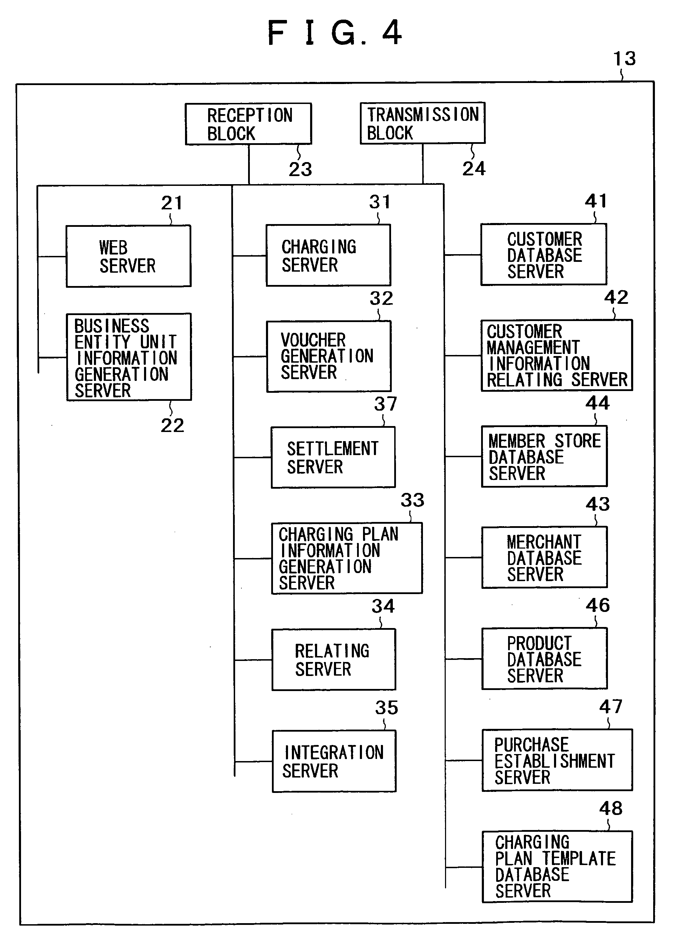

The following describes the charging apparatus 13 practiced as another embodiment of the invention with reference to FIG. 4. FIG. 4 is a block diagram illustrating a schematic configuration of the charging apparatus 13.

As shown in FIG. 4, the charging apparatus 13 includees a Web server 21, a business entity unit information generation server 22, a reception block 23, a transmission block 24, a charging server 31, a voucher generation server 32, a charging plan information generation server 33, an relating server 34, an integration server 35, a settlement server 37, a customer database server 41, a customer management information relating server 42, a member store database server 44, a merchant database server 43, a product database server 46, a purchase establishment server 47, and a charging plan template database server 48.

It should be noted that the above-mentioned charging apparatus 13 has a various servers shown in FIG. 4 in a separate manner, but not exclusively; for example, these servers may be configured in a unitized manner.

In response to the access from the business entity apparatus 7 for example, the charging apparatus 13 executes the registration of the customer 9 and provides Web screens, for example. Having completed the registration of the customer 9, the charging apparatus 13 issues a common customer ID for the identification of the customer 9. When the customer 9 purchases a product from the merchant 10 on the basis of the common customer ID, the charging apparatus 13 can charge the customer 9 for the product purchased thereby. It should be noted that, in the case of the unique customer ID issued by the business entity apparatus 7, the charging apparatus 13 can charge the customer 9 for the purchase.

Therefore, the merchant 10 can make the charging apparatus 13 execute charging processing, billing processing, and settlement processing on behalf of the merchant 10. The common registration of the customer 9 will be detailed later.

The reception block 23 receives data via the network 3 to send the received data to each destination server. The transmission block 24 sends data to the destination business entity apparatus 7 via the network 3. It should be noted that the reception block 23 and the transmission block 24 may be configured in a unitized manner as with a router for example.

When the customer 9 purchases products provided by the merchant 10, the charging processing and so on for the customer 9 are executed by the charging apparatus 13 on behalf of the business entity apparatus 7.

In response to the access by the business entity apparatus 7, the Web server 21 generates the Web screen data for displaying a Web screen on the display block 74 of the business entity apparatus 7. For example, in the common registration of the customer 9, the Web server 21 generates the Web screen data for the common registration with the business entity apparatus 7.

Upon request from the business entity apparatus 7 of the merchant 10, the business entity unit information generation server 22 sets relation information between a plurality of merchants 10. This relation information is stored in a merchant database owned by the merchant database server 43 to be described later.

When the relation information is set between merchants 10, a business entity unit composed of a plurality of merchants is formed, thereby generating the business entity unit information about this business entity unit. When the business entity unit information is generated, the charge and settlement to be executed for each merchant 10 can be collectively executed for all merchants 10.

It should be noted that the integration server 35 execute integration processing for each business entity unit on the basis of the business entity unit information generated by the business entity unit information generation server 22. In the integration processing, the sale information generated in each business entity apparatus 7 in the business entity unit is added up for example, of which details will be described later. The relation information and the business entity unit information will also be described later.

The charging server 31 executes charging on the purchase of products purchased by the customer 9 from the merchant 10, on behalf of the business entity apparatus 7 on the side of the merchant 10. The charging processing includes the one-time rate charging which occurs only once every time the customer 9 purchases a product from the merchant 10 and the continuous charging which continues from the start to the end of the provision of a service by the merchant 10 for the customer 9.

The continuous charging is applied to the uses of mobile phones and Internet providers for example. The one-time rate charging and the continuous charge are defined at the time of product purchase by the charging plan information related to the purchased products. The charging plan information will be detailed later.

The voucher generation server 32 generates charging voucher information or billing voucher information on the basis of the charging information generated by the charging processing by the charging server 31. The charging voucher information is sent to the business entity apparatus 7. Referencing the charging voucher information, the merchant 10 can verify the validity of charging processing.

The billing voucher information is sent to the business entity apparatus 7. Further, billing vouchers are outputted from an output device, not shown, connected to the business entity apparatus 7. By checking billing vouchers, the customer 9 can make confirmation of the purchased products and the amounts billed.

The settlement server 37 executes the settlement of the amount billed indicated by the billing voucher information on a settlement ASP (Application Service Provider) such as a bank or a credit-card company.

For example, if the customer 9 has purchased a product from the merchant 10, the voucher generation server 32 or the charging server 31 sends the billing voucher information or charging voucher information of the customer 9 such as his/her credit card to the settlement server 37 at predetermined time intervals.

The settlement server 37 generates billing information on the basis of the above-mentioned charging voucher information or billing voucher information and sends the generated billing information to the settlement ASP via the network 3. In response, the settlement ASP withdraws the amount billed from the charge of the customer 9 on the basis of the billing voucher information. The billing voucher information and the charging voucher information will be detailed later.

The charging plan information generation server 33 generates charging plan information for charging the customer 9 who purchased products. Further, this server stores the generated charging plan information. The charging plan information is generated on the basis of a charging template and charging parameter information which is set as specified by the business entity apparatus 7. It should be noted that the charging plan information generation server 33 according to the present embodiment is equivalent to the charging plan information generation means, for example.

The relating server 34 relates products with the charging plan information generated by the charging plan information generation server 33. The relating of this charging plan information with products can be executed as instructed by the business entity apparatus 7 of the merchant 10. It should be noted that the charging plan information generation server 33 according to the present embodiment is equivalent to the relating means for example according to the present embodiment.

Having related a product with the charging plan information, the relating server 34 generates traded product information and stores the generated traded product information into the traded product database stored in the product database server 46. This traded product information is generated every time one product is related with one piece of charging plan information, for example.

When a relationship has been placed between charging plan information and products and a product is selected, the charging plan information bound to the selected product can be identified. Alternatively, when a particular piece of charging plan information is selected, a product bound to the selected information can be identified. It should be noted that the relating server 34 can relate one or more products to one piece of charging plan information.

When a relationship has been placed between products and charging plan information, the customer 9 is ready to purchase desired products. When a product is purchased by the customer 9, the charging server 31 and the settlement server 37 execute charging and settlement on the customer 9 who purchased the product on the basis of the charging plan information related to the purchased product. It should be noted that the charging server 31 according to the present embodiment is equivalent to the charging means for example according to the present embodiment.

The purchase establishment server 47 generates purchase information on the basis of the purchase registration information received from the customer terminal apparatus 5 for the customer 9 to purchase the product. When the purchase information has been generated, the purchase of the product is established.

Further, the purchase establishment server 47 stores the generated purchase information into the customer database of the customer database server, under the customer profile information of the customer 9. The purchase information will be detailed later.

It should be noted that the relation between the charging plan information and products according to the present embodiment is also practicable in the case of the automatic relation between the product ID of a registered product and the plan ID for identifying charging plan information, for example. In this case, the systems of product IDs and plan IDs are categorized to efficiently execute proper relation processing.

It should be noted that the plan ID is a common plan ID which is automatically issued upon generation of charging plan information or a unique plan ID. The common plan ID is issued by the charging plan information generation server 33. The unique plan ID is issued by the business entity apparatus 7.

The customer database server 41 stores a customer database, not shown. The customer database stores various pieces of information including the customer profile information, customer management information, and charging customer information associated with the customer 9.

In response to a request from each server, the customer database server 41 gets the information from the above-mentioned customer database and returns the obtained information to the requesting server. The charging customer information will be detailed later.

The member store database server 44 stores a member store database which includes various pieces of attribute information of the member store 11. The member store database stores a plurality of pieces of information for each member store 11. The information which is generated for each member store 11 is configured at least by member store ID, name of member store 11, contract date registered with the charging apparatus 13, address of member store 11, phone number of member store 11, and e-mail address of member store 11.

It should be noted that the member store database server 44 according to the present embodiment is not restricted to the above-mentioned example; for example, facsimile number and person in charge of member store 11 may be added to the database.

In response to a request from each server, the customer database server 41 searches the above-mentioned member store database for the requested information and returns the retrieved information to the requesting server. In the case of registering the member store 11, the customer database server 41 stores the registration information about the member store 11 into the member store database.

In the registration of the member store 11, the manager, not shown, for example of the member store 11 accesses the charging apparatus 13 to execute the procedure for registering the member store 11. The registration of the member store 11 is executed by accessing the charging apparatus 13 from the representative business entity apparatus 7. When the member store 11 has been registered, the registration of the merchant 10 is ready to be registered.

To register the member store 11, the business entity apparatus 7 generates member store registration data such as the name of the member store 11 and the contract date registered with the charging apparatus 13 and sends the generated information to the charging apparatus 13.

The member store database server 44 issues a member store ID and, on the basis of the above-mentioned member store registration data, stores the information associated with the member store 11 into the member store database. When the registration of this information has been completed, the registration of the member store 11 is also completed. It should be noted that the member store database server 44 will be detailed later.

The merchant database server 43 stores a merchant database, not shown, which includes various kinds of attribute information of the merchant 10. The merchant database stores a plurality of records for each merchant 10. Each of these records is configured at least by merchant ID for identifying the merchant 10, merchant name, start date, end date, member store ID of the member store 11 to which the merchant 10 belongs, sale report date, an relation information.

It should be noted that the merchant database according to the present embodiment is not restricted to the one mentioned above in which it is configured by merchant ID, merchant name, purchase start date, purchase end date, member store ID of the member store 11 to which the merchant 10 belongs, sale report date, an relation information.

In response to a request from each server, the merchant database server 43 searches the above-mentioned database for requested information and returns the retrieved information to the requesting server. In the registration of the merchant 10, the registration information associated with the merchant 10 is stored in the merchant database. The registration of the merchant 10 will be detailed later.

A product database server 46 stores a product database with which the products to be sold are registered or a traded product database in which products are related with charging plan information.

The product database stores a plurality of records for each product. Each of these records is configured at least by unique product ID for product identification, common product ID, merchant ID of product providing source, product name, price, tax type, GLID, and product flag. It should be noted that unique product ID is a product ID which is issued by the business entity apparatus 7 and the above-mentioned common product ID is an ID which is issued by the charging apparatus 13.

The above-mentioned merchant ID is an ID which is uniquely managed by the side of the business entity apparatus 7, but not exclusively; for example, the merchant ID may be an ID which is issued by the charging apparatus 13.

GLID is a charging item code. GLID is defined by the merchant 10. Purchase start date and time is a date and time on which the customer 9 can actually purchase a product. Purchase end date and time is a date and time on which the customer 9 cannot purchase a product any more. Tax type denotes a type of tax which is applied to a purchased product; for example, consumption tax.

The above-mentioned product flag denotes "product" if "1", "shipping charge" if "2", "handling charge" if "3", "tax charge" if "4", and "payment on delivery" if "5".

Because products are registered for each merchant 10, products can be registered even if unique product IDs duplicate as long as merchant IDs are different. However, if merchant ID and unique product ID both duplicate, no product can be registered. The registration of products will be detailed later.

The traded product database stores one or more traded product records. These traded product records are generated by relating products with charging plan information by the relating server 34. The traded product database will be detailed later.

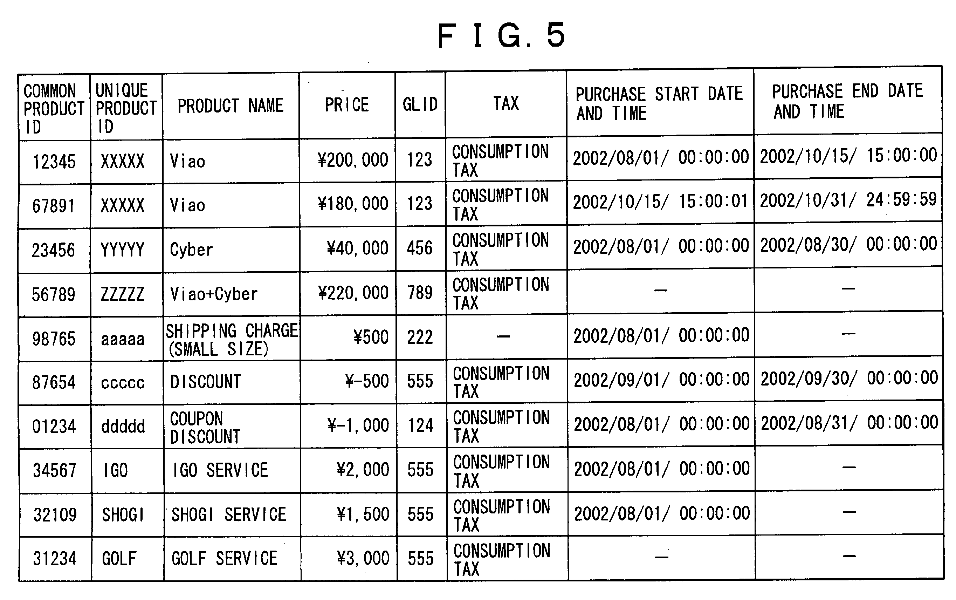

The following describes the product database according to the present embodiment with reference to FIG. 5. FIG. 5 illustrates a schematic configuration of the product database.

As shown in FIG. 5, the items of the product database are at least common product ID, unique product ID, merchant ID of product providing source (not shown), product name, price, GLID, tax type, purchase start date and time, purchase end date and time, and product flag (not shown).

As shown in FIG. 5, the product having common product ID "56789" is defined in neither purchase start date and time nor purchase end date and time. If purchase start date and time is not set, it indicates that a start date and time on which a product is purchasable is not especially set. Therefore, those products not defined in purchase start date and time can be purchased any time before their purchase end date and time. If purchase end date and time is not set, it indicates that the date and time on which a product can be purchased will not end. Therefore, products can be purchased any time after product start date and time. It should be noted that if neither purchase start date and time nor purchase end date and time is set, products can be purchased any time.

Further, as shown in FIG. 5, the product having common product ID "98765" is not defined in tax type. If tax type is not defined, it indicates there is no tax application. The product having common product ID "87654" indicates that its price is "¥ -500".

If the price is preceded with a negative sign as with the product of which common product ID is "87654", it indicates a discount price or a coupon price. When a discount price or a coupon price is applied, an amount obtained by deducting a predetermined price from the price of each purchased product is charged.

Next, the charging plan template database server 48 stores one or more charging plan template databases. Each charging plan template database stores one or more charging plan templates. These charging plan templates are stored in the charging plan template database before charging plan information is generated.

These charging plan templates provide models used for generating charging plan information. As described above, the charging plan information generation server 33 sets charging parameter information to each charging plan template specified by the business entity apparatus 7, thereby generating charging plan information.

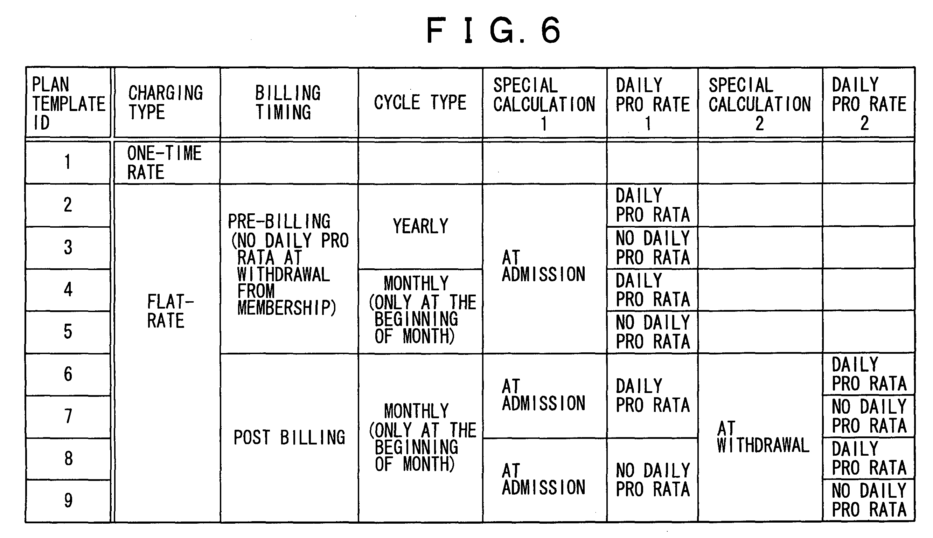

The following describes the charging plan template database practiced as one embodiment of the invention with reference to FIG. 6. FIG. 6 illustrates the schematic configuration of the charging plan template database.

As shown in FIG. 6, the items of the charging plan template database at least include plan template ID for identifying charging template, charging type, billing timing, cycle type, special calculation 1, daily pro rata 1, special calculation 2, and daily pro rata 2.

The charging type item according to the present embodiment sets "one-time rate" or "flat-rate" charging type information. "One-time rate" denotes one-time rate charging type in which charging is executed every time a product is purchased. Therefore, there is no continuity in the one-time rate charging; namely, charging is completed by a single charging processing operation.

"Flat-rate" denotes flat-rate charging information. Flat-rate charging information denotes the charging in which a constant amount is charged periodically. Therefore, when a product is purchased, the buyer is continuously charged in a predetermined cycle.

The charging types according to the present embodiment are configured, but not exclusively, by "one-time rate" and "flat-rate". For example, "metered rate" may be added in which charging is executed in accordance with time used.

The billing timing information is configured by "pre-billing" in which charging is executed before service provision and "post-billing" in which charging is executed after service provision. It should be noted that the billing timing according to the present embodiment is not restricted to the above-mentioned configuration of "pre-billing" and "post-billing".

Charging cycle information (hereafter referred to as cycle type information) denotes a cycle in which to executing charging. The cycle type according to the present embodiment is configured by, but not exclusively, "yearly" and "monthly"; for example, other types of cycles are also practicable.

Special calculation 1 and special calculation 2 denote special calculations which are executed at "admission to membership" and at "withdrawal from membership". For example, the special calculation at "admission" includes a calculation in which nothing is charged for three months after admission. The special calculation at "withdrawal" includes a calculation in which a reward is given in accordance with the charging period before withdrawal, for example. However, the special calculations are not restricted to these examples. Daily pro rata 1 and daily pro rata 2 denote whether to execute daily pro rate calculations. It should be noted that the admission timing denotes a time at which the purchase of a product or the use of a service is contracted and the withdrawal timing denotes a time at which the purchase of a product or the use of a service is canceled, for example.

If the plan template ID of the charging plan template is "6", the charging plan template is "flat-rate" in charging type information, "post-billing" in billing timing information, "monthly (only at the beginning of month)" in cycle type information, "at admission" in special calculation 1, "daily pro rata" in daily pro rata 1, "at withdrawal" in special calculation 2, and "no daily pro rata" in daily pro rata 2.

In accordance with the settings specified by the business entity apparatus 7, charging parameter information is set to the items from charging type to daily pro rata 2 of the above-mentioned charging plan template. Therefore, charging plan information is generated from charging plan template and charging parameter information.

It should be noted that the charging plan template according to the present embodiment is of, but not exclusively, 9 types, ID "1" to ID "9"; for example, one or more charging plan templates may be registered.

As described above, the charging plan template database according to the present embodiment is configured by plan template ID, charging type, billing timing, cycle type, special calculation 1, daily pro rata 1, special calculation 2, and daily pro rata 2. However, this database is not restricted to this configuration. For example, other items may be added to this database or some of the items, special calculation 1 or daily pro rata 1 for example, may be removed from the database.

### Operations of the Charging System

The following describes an embodiment of the operations of the charging system 1 configured as described above.

### Registration of Member Stores

To use the charging system, the member store 11 must be registered with the charging apparatus 13. For example, the representative business entity apparatus 7 accesses the charging apparatus 13 for the registration.

When the access has been completed, the business entity apparatus 7 requests the charging apparatus 13 for a Web screen for member store registration. In response, the Web server 21 supplies the Web screen data for the registration to the business entity apparatus 7.

Receiving the Web screen data for member store registration, the business entity apparatus 7 displays a member store registration screen, not shown, onto its display block 74. The member store registration screen have an item entry block, not shown, for setting the information necessary for the registration of the member store 11.

The necessary information is entered in the item entry block through the mouse or keyboard of the input block 73 of the business entity apparatus 7. When the necessary information has been entered and "Execute" button is pressed, member store registration data are generated.

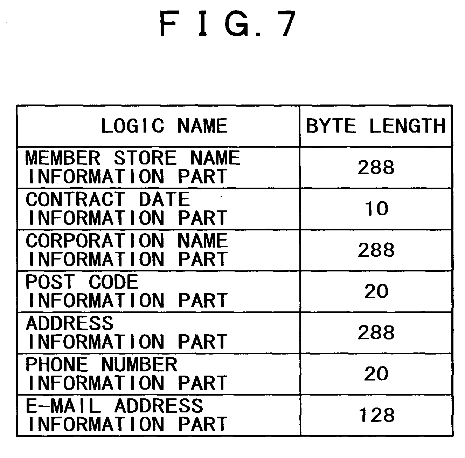

The following describes the member store registration data according to the present embodiment with reference to FIG. 7. FIG. 7 illustrates a schematic data structure of the member store registration data.

As shown in FIG. 7, the member store registration data include at least a member store name information part (288 bytes) indicative of the name of the member store 11, a contract date information part (10 bytes) indicative of the date of registration with the business entity apparatus 7, an address information part (288 bytes) of the member store 11, a phone number information part (20 bytes) of the member store 11, and an e-mail address information part (128 bytes) of the member store 11. However, the member store registration data are not restricted to this configuration; for example, other items may be added for some of the items may be removed.

Each item of the member store registration data according to the present embodiment has a predetermined byte length. However, the member store registration data are not restricted to this configuration; each item may have another byte length.

The generated member store registration data are sent from the transmission block 71 of the business entity apparatus 7 to the charging apparatus 13 via the network 3. The reception block 23 of the charging apparatus 13 receives the data.

The reception block 23 sorts and sends the received data to the member store database server 44. The member store database server 44 receives the data.

The member store database server 44 issues a member store ID to the received member store registration data and stores the information about the member store 11 set to the member store registration data and the issued member store ID into the member store database. When this storage has been completed, the registration of the member store 11 is completed.

In addition, when the registration of the member store 11 has been completed, the registration result information including the issued member store ID is sent to the Web server 21 from the member store database server 44. In response, the Web server 21 generates the Web screen data in which the received registration result information is included and sends the generated Web screen data to the business entity apparatus 7 via the network 3.

Having received the Web screen data including the registration result information via the network 3, the business entity apparatus 7 displays the received information onto the display block 74. Consequently, the successful registration of the member store 11 can be confirmed by checking the registration result information displayed on the display block 74.

For the registration of the member store 11 according to the present embodiment, the registration from the business entity apparatus 7 is used in the above-mentioned example. However, the registration is not restricted to this configuration; for example, the registration of the member store 11 may be executed from a charging settlement apparatus, not shown, externally connected to the charging apparatus 13.

### Registration of the Merchant 10

To use the charging system after registering the member store 11, the merchant 10 must be registered with the charging apparatus 13 as described above. To do so, the business entity apparatus 7 of the merchant 10 accesses the charging apparatus 13.

When the access has been completed, the business entity apparatus 7 requests the charging apparatus 13 for a Web screen for merchant registration. In response, the Web server 21 supplies the Web screen data for the registration to the business entity apparatus 7.

Receiving the Web screen data for merchant registration, the business entity apparatus 7 displays a merchant registration screen, not shown, onto its display block 74. The merchant registration screen have an item entry block, not shown, for setting the information necessary for the registration of merchant 10.

The necessary information is entered in the item entry block through the mouse or keyboard of the input block 73 of the business entity apparatus 7. When the necessary information has been entered and "Execute" button is pressed, merchant registration data are generated.

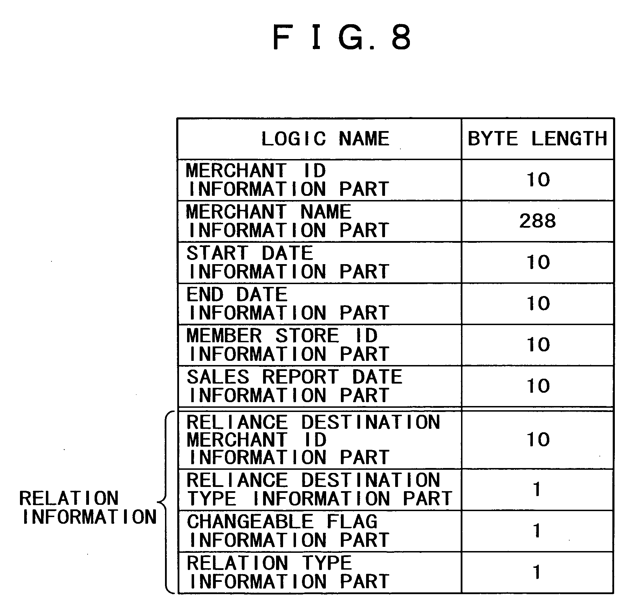

The following describes the merchant registration data according to the present embodiment with reference to FIG. 8. FIG. 8 illustrates a schematic data structure of the merchant registration data according to the present embodiment. The merchant registration data includes relation information.

As shown in FIG. 8, the merchant registration data include a merchant ID information part for identifying the merchant 10, a merchant name information part indicative of the name of the merchant 10, a start date information part, an end date information part, a member store ID information part of the member store 11 to which merchant 10 belongs, a sales report date information part, and relation information. However, the merchant registration data are not restricted to this configuration. For example, other items may be added or some of the items may be removed.

The relation information is configured at least by a reliance destination merchant (namely, a merchant on which reliance is made) ID information part, a reliance type information part, a changeable flag information part, and a relation type information part.

To the merchant ID information part, the 10-byte identification information of the merchant 10 is set. The merchant ID is issued by the business entity apparatus 7 side, but not exclusively; for example, the merchant ID may be issued by the charging apparatus 13.

To the merchant name information part, the 288-byte name of the merchant 10 is set. The merchant name consists of 96 full characters and their font may be either English or Japanese.

To the start date information part, a 10-byte start date at which the merchant 10 is valid is set. To the end date information part, a 10-byte end date at which the merchant 10 is valid is set.

To the part of the ID information of the member store to which the merchant 10 belongs, the 10-byte member store ID is set. The member store ID is issued by the charging apparatus 13.

To the sales report date information part, the 10-byte reference date at which sales data to be extracted as a sales report is set.

The relation information is configured at least by a reliance destination merchant ID information part, a reliance destination type information part, a changeable flag information part, and a relation type information part as shown in FIG 8. It should be noted that, if nothing is set to any of the information parts included in the relation information at the time of registering the merchant 10, the merchant registration data are practicable.

To the reliance destination merchant ID information part, the merchant ID of the reliance destination merchant 10 is set. A relaying relation is caused by setting the relation information between the reliance source merchant 10 (relying merchant 10) of interest and the reliance destination merchant 10 (or the merchant 10 on which reliance is made). It should be note that the merchant 10 of interest is the merchant 10 itself. The byte length of the reliance destination merchant ID is 10 bytes.

To the reliance destination type information part, a subject on which reliance is made is set. If this part is "0", the customer profile information associated with unique customer ID is the subject of reliance; if this part is "1", a settlement means folder, not shown, is the subject of reliance. However, the reliance destination type is not restricted to this configuration; for example, other reliance subjects may be set.

The byte length of the relation type information part is one byte. To the relation type, a code "1" to "5" is set.

The codes to be set to the relation type information part are "1" indicative of customer ID lineup, "2" indicative of billing unit, "3" indicative of sale unit, and "4" indicative of settlement unit. Code "2" indicative of billing unit is also included in code "1" indicative of customer ID lineup. It should be noted that the code lineup is not restricted to this configuration; for example, other codes may be added or some of the codes may be removed.

Billing unit allows the totalization of the billing information of the relying merchant 10 (or the parent merchant) to bill the customer 9 of the reliance destination merchant 10. For this, the customer profile information and so on of the parent merchant must be available on the basis of the customer ID lineup of the relation type in advance.

To the above-mentioned changeable flag information part, whether various kinds of information associated with the relying merchant 10 of interest can be changed or not is set by accessing the charging apparatus 13 from the business entity apparatus 7 of the merchant 10 on which reliance is made. The byte length of the changeable flag information part is one byte.

To access the charging apparatus 13, the business entity apparatus 7 must log in beforehand. Once logged in, the charging apparatus 13 references the terminal operation right information, not shown, of the above-mentioned business entity apparatus 7 stored beforehand to give the rights such as the areas and services accessible by the business entity apparatus 7.

Therefore, if the terminal operation right information of the business entity apparatus 7 on which reliance is made allows the use of the terminal operation right information of the relying business entity apparatus 7, the charging apparatus 13 gives, to the business entity apparatus 7 on which reliance is made, the rights such as accessible areas and services of the business entity apparatus 7 on which reliance is made and the relying business entity apparatus 7.

If the changeable flag is "1", the terminal operation right information of the relying business entity apparatus 7 can be used and the relying business entity apparatus 7 can access the charging apparatus 13.

Therefore, if the changeable flag is "1", it indicates that the subject of reliance set to reliance type can be changed from the business entity apparatus 7 associated with the parent merchant 10; if the changeable flag is "0", it indicates that the subject of reliance set to reliance type cannot be changed. The relation information and the business entity unit information will be detailed later.

For the items forming the merchant registration data according to the present embodiment, the predetermined byte lengths are defined. However, the predetermined byte lengths are not restricted to this configuration. For example, any of the byte lengths may take another value.

In the above-mentioned example, the reliance destination merchant ID information part, the destination reliance type information part, the changeable flag information part, and the relation type information part form the relation information as one unit. However, the unit of the information parts is not restricted to this configuration. For example, two or more units of relation information may be used.

The generated merchant registration data are sent from the transmission block 71 of the business entity apparatus 7 to the charging apparatus 13 via the network 3. The reception block 23 of the charging apparatus 13 receives the data.

The reception block 23 sorts and sends the received merchant registration data to the merchant database server 43. The merchant database server 43 receives the data.

The merchant database server 43 stores the registration information of the merchant 10 set to the received merchant registration data into the merchant database. When the storage has been completed, the registration of the merchant 10 is completed.

After the registration, registration result information is sent from the merchant database server 43 to the Web server 21. The Web server 21 generates Web screen data in which the registration result information is included and sends the generated Web screen data to the business entity apparatus 7 via the network 3.

The business entity apparatus 7 receives the Web screen data in which the registration result information is included via the network 3 and displays the received data onto the display block 74. Consequently, the successful registration of the merchant 10 can be confirmed by checking the registration result information displayed on the display block 74.

For the registration of the merchant 10 according to the present embodiment, the registration from the business entity apparatus 7 is used in the above-mentioned example. However, the registration is not restricted to this configuration; for example, the registration of the merchant 10 may be executed from a charging settlement apparatus, not shown, externally connected to the charging apparatus 13.

After the registration of the merchant 10, the business entity apparatus 7 is ready to execute the registration of the customer 9, the registration of products, and the generation of charging plan information by accessing the charging apparatus 13. When the above-mentioned predetermined registration has been completed, the charging of products can be executed by the charging apparatus 13 on behalf of the business entity apparatus 7.

### Top Page Screen and Associated Screens

The following describes Web screens which are supplied from the Web server 21 and displayed on the display block 74 of the business entity apparatus 7.

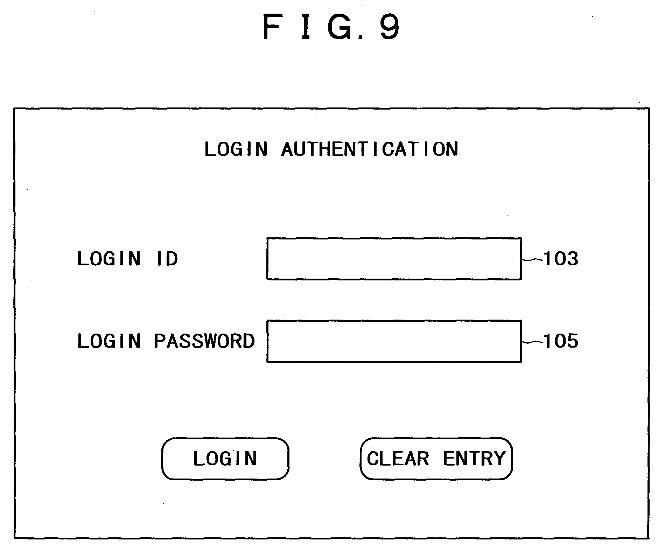

First, when the business entity apparatus 7 accesses the charging apparatus 13, a login screen is displayed for a top page screen to be displayed on the display block 74. As shown in FIG. 9, the login screen is configured by an ID 103 indicative of the personal identification number of a user belonging to the merchant 10 and a PW 105 indicative of the user's password.

When the user's identification information is entered in the ID 103 and the PW 105 of the login screen and "Login" button is clicked by the mouse for example, the charging apparatus 13 performs authentication to make the charging system ready for use.

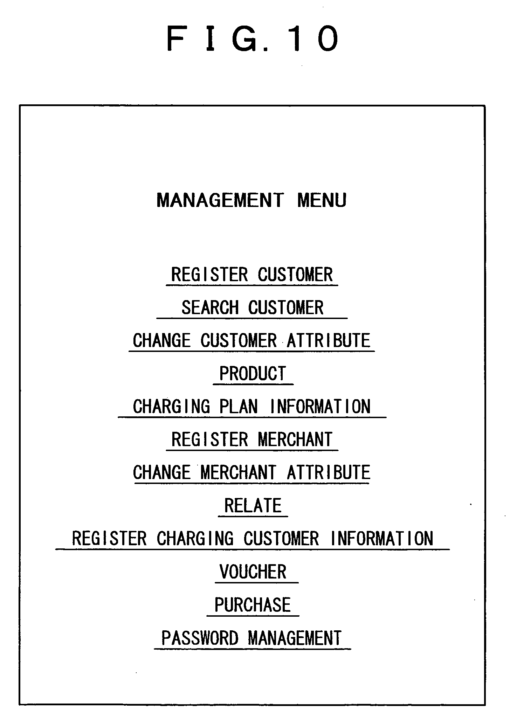

When the login operation is successful, then a "Management Menu" screen shown in FIG. 10 appears on the display block 74. The management menu screen is a Web screen which is displayed after the login of the business entity apparatus 7.

As shown in FIG. 10, the "Management Screen" shows screen items including "Register Customer", "Search Customer", "Change Customer Attribute", "Product", "Charging Plan Information", "Register Merchant", "Change Merchant Attribute", "Relate", "Register Charging Customer Information", "Voucher", "Purchase", and "Password Management".

When item "Change Merchant Attribute" is selected, "Change Merchant Attribute" screen, not shown, appears. On "Change Merchant Attribute" screen, the attribute information associated with the registered merchant 10 is changed or deleted.

When item "Password Management" is selected, "Password Management" screen, not shown, appears. On "Password Management" screen, the password is changed for example. The above-mentioned password is used to login on the charging apparatus 13 from the business entity apparatus 7. The screens associated with other items will be detailed later.

### Setting Relation Information

The merchant 10 is a unit of business that constitutes the member store 11. Therefore, one member store 11 allows to have a plurality of merchants 10 therein. Relation information can be set between the plurality of merchants 10 to generate business entity unit information.

For example, use of the business entity unit information in generating sale information in a predetermined period of the representative parent merchant 10 allows the efficient generation of the sale information. Namely, the efficiency in generating the sale information can be enhanced by integrating and totalizing the sale information of the parent merchant 10 in the business entity unit and the sale information of the child merchant 10 subordinate to the parent merchant 10.

By setting the above-mentioned business entity unit information, all the merchants 10 within the business entity unit can be integrated for the processing of charging and billing. If these merchants 10 are not members of the same member store 11, this integration processing is practicable.

As described above, relation information can be set at the registration of the merchant 10. It should be noted that relation information can also be set to the merchant 10 at other times than registration.

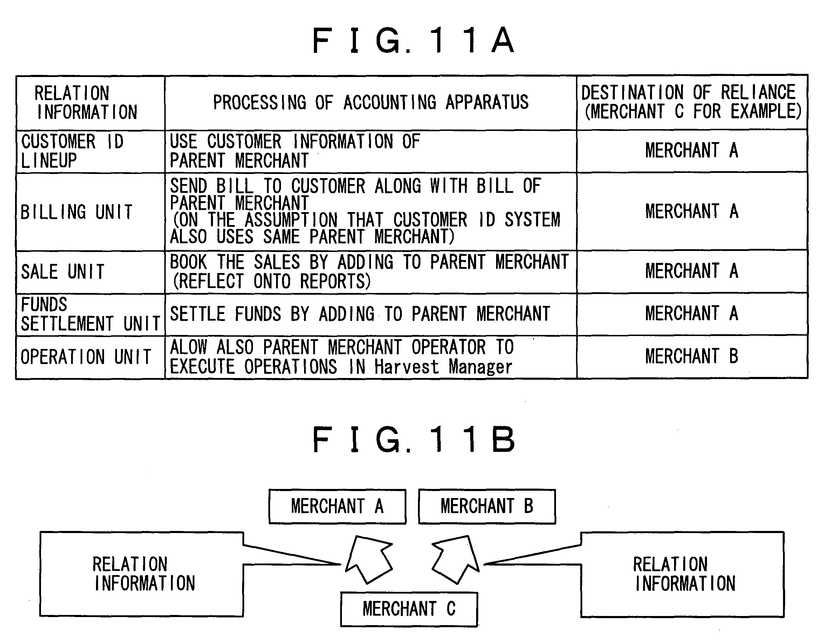

The following describes the relation information according to the present embodiment with reference to FIGS. 11A and 11B. These figures illustrate the outline of the relation information according to the present embodiment.

As shown in FIG. 11A, the relation information is configured at least by customer ID lineup, billing unit, sale unit, settlement unit, and operation unit. It should be noted that this relation information is substantially the same in configuration as the relation information described above in the example of the merchant registration data.

As shown in FIG. 11B, suppose that the relation information is set between merchant A, merchant B, and merchant C, then, if merchant C is a relying merchant, merchant A and merchant B are the merchants on which merchant C relies.

It should be noted that relying merchant C for example is the child merchant and merchant A and merchant B on which the child merchant relies are parent merchants. The child merchant is subordinate to the parent merchant.

The relation information according to the present embodiment is described above by use of the subordinate relation between the merchants 10 for example. However, the relation information is not restricted to this configuration; for example, an equal relation or reciprocal relation between the merchants 10 may also be practicable.

As shown in FIG. 11A, when the customer ID lineup is set as the relation information, the charging apparatus 13 uses the customer information such as the customer profile information registered with reliance destination merchant A. Consequently, for the customer information registered with merchant C, the customer information of merchant A is used.

When the billing unit is set as the relation information, the charging apparatus 13 adds up the billing information of merchant C and the billing information of merchant A for each customer 9 and bills the customer 9. Therefore, efficient billing processing can be realized in the case where merchant A manages the bills to the customers 9 in an integrated manner for example. It should be noted that the billing information is used to bill customers 9 charged for products or services purchased by them.

When the sale unit is set as the relation information, charging apparatus 13 adds up the sale information of merchant C to the sale information of merchant A to book the sales. Therefore, an efficient sales booking can be achieved in the case where the sale information of merchant A is obtained for example. It should be noted that the sale information is obtained by selling products by the merchant 10.

When the settlement unit is set as the relation information, the charging apparatus 13 adds up the settlement information of merchant C to merchant A to execute fund settlement. Therefore, efficient settlement processing can be achieved in the case where the settlements of customers 9 are managed by the merchant A in an integrated manner for example.

When the operation unit is set as the relation information, the access from the business entity apparatus 7 of merchant B to the customer profile information for example of merchant C is allowed. It should be noted that the operation unit is defined by the above-mentioned changeable flag in the allowance of the access.

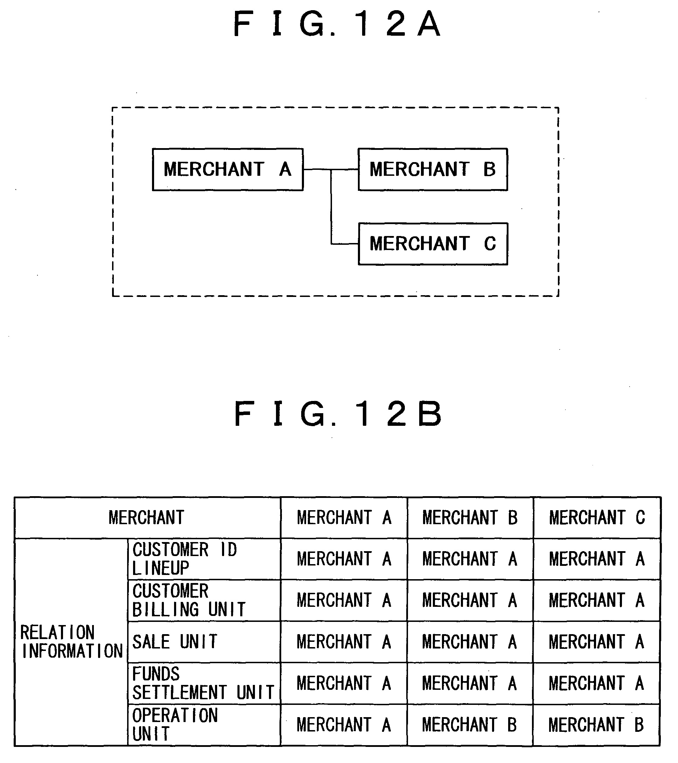

The following describes the business entity unit information according to the present embodiment with reference to FIGS. 12A and 12B. These figures illustrate the outline of the business entity unit information according to the present embodiment.

As shown in FIG. 12A, the business entity unit information is composed of the parent merchant 10 (or merchant A) and the child merchants 10 (or merchant B and merchant C) enclosed by dashed lines.

In the above-mentioned example, the business entity unit information is configured by merchants A to C. However, the business entity unit information is not restricted to this configuration. For example, the business entity unit information is also practicable if there are two or more merchants.

As shown in FIG. 12B, the business entity unit information is configured by the relation information of merchant A, the relation information of merchant B, and the relation information of merchant C. It should be noted that, for the relation information of merchant A, merchant A itself is set as the initial setting because merchant A is the parent merchant.

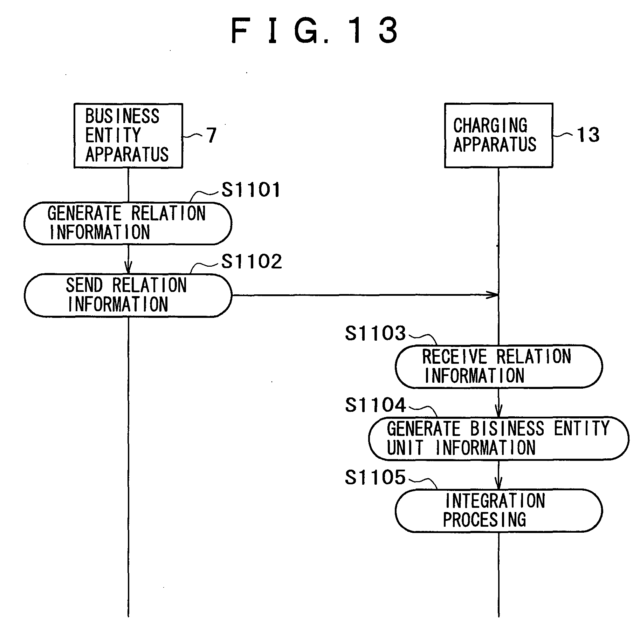

The following describes the generation of the business entity unit information according to the present embodiment with reference to FIG. 13. FIG. 13 illustrates a timing chart indicative of the outline of the processing of generating the business entity unit information according to the present embodiment.

As shown in FIG. 13, in generating the business entity unit information, the business entity apparatus 7 of the merchant 10 generates the relation information (S1101). The generation of the relation information can be executed at the time of registering the merchant 10 or changing the attribute of the merchant 10.

For example, as shown in FIG. 12B, the business entity apparatus 7 of merchant C generates the relation information with merchant A being the reliance destination. The business entity apparatus 7 of merchant B also generates the relation information with merchant A being reliance destination.

Next, as shown in FIG. 13, the business entity apparatus 7 sends the generated relation information to the charging apparatus 13 via the network 3 (S1102). The reception block 23 of the charging apparatus 13 receives this relation information via the network 3 (S1103).

The reception block 23 sends the received relation information to the merchant database server 43. The merchant database server 43 receives the relation information.

Next, upon reception of the relation information of merchant B and merchant C, the merchant database server 43 registers the received relation information with the merchant database and, at the same time, generates the business entity unit information with merchant A being the parent merchant (S1104). It should be noted that the relation information of merchant A is kept initially set.

The generated business entity unit information is stored in the merchant database server 43. Further, the integration server 35 executes the integration processing such as integrating the billing information and sale information on the basis of the business entity unit information at predetermined time intervals (S1105). Consequently, the generation of the business entity unit information allows the integration processing collectively for the business unit composed of two or more merchants 10 at the time of processing such as billing for example.

As shown in FIG. 12B, the amounts billed for example of merchant B and merchant C are booked to merchant A constituting the business entity unit information. This is because it is necessary for the parent merchant to add up and manage the charges and sales that occurred on the child merchants. This includes consolidated accounting for example.

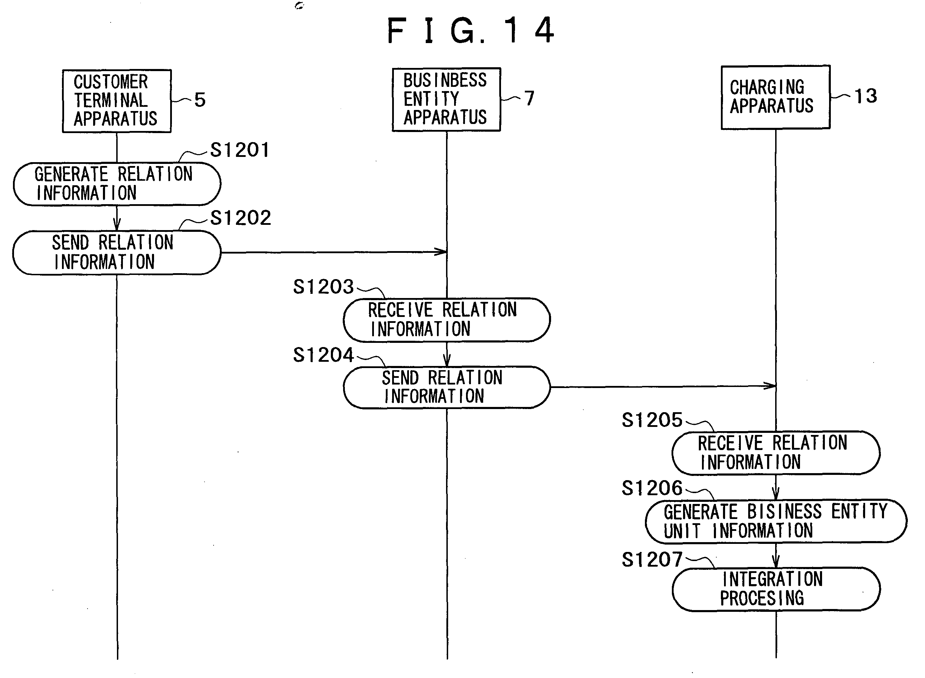

In the above-mentioned example, the business entity unit information according to the present embodiment is configured by the merchant 10. However, the business entity unit information is not restricted to this configuration; for example, the business entity unit information may also be configured by the customer 9. The following describes the outline of the processing of generating the business entity unit information configured by the customer 9 with reference to FIG. 14. FIG. 14 illustrates the timing chart indicative of the outline of the processing of generating the business entity unit information configured by the customer 9 according to the present embodiment.

As shown in FIG. 14, the processing of generating the business entity unit information starts by generating the relation information by the customer terminal apparatus 5 of the customer 9 (S1201). The relation information is generated by setting the common customer ID or the unique customer ID as the reliance destination. It should be noted that the relation information of the customer 9 is substantially the same in configuration as the relation information of the merchant 10.

Next, the customer terminal apparatus 5 sends the relation information to the business entity apparatus 7 via the network 3 (S1202). It should be noted that the customer terminal apparatus 5 has already logged in on the business entity apparatus 7.

Next, the business entity apparatus 7 receives the relation information via the network 3 (S1203). Upon reception, the business entity apparatus 7 executes a format check operation for example and then sends the relation information to the charging apparatus 13 via the network 3 (S1204).

The reception block 23 of the charging apparatus 13 receives the relation information via the network 3 (S1205). The reception block 23 sends the received relation information to the customer database server 41. The customer database server 41 receives the relation information.

Upon reception of the relation information, the customer database server 41 generates the business entity unit information with the relation information set to two or more customers 9 on the basis of the relation information (S1206).

The generated business entity unit information is stored in the customer database server 41. In addition, the integration server 35 executes integration processing on the business entity unit configured by two or more customers 9 on the basis of the business entity unit information at predetermined time intervals (S1207). Consequently, the charge billing information or settlement information for example can be collectively added up and booked.

### Registration of the Customer 9:

To purchase products, the customer 9 must be registered with the merchant 10 in advance. The registration of the customer 9 is executed by accessing the business entity apparatus 7 from the customer terminal apparatus 5 of the customer 9 and through "Customer Registration" screen displayed on the display block 54.

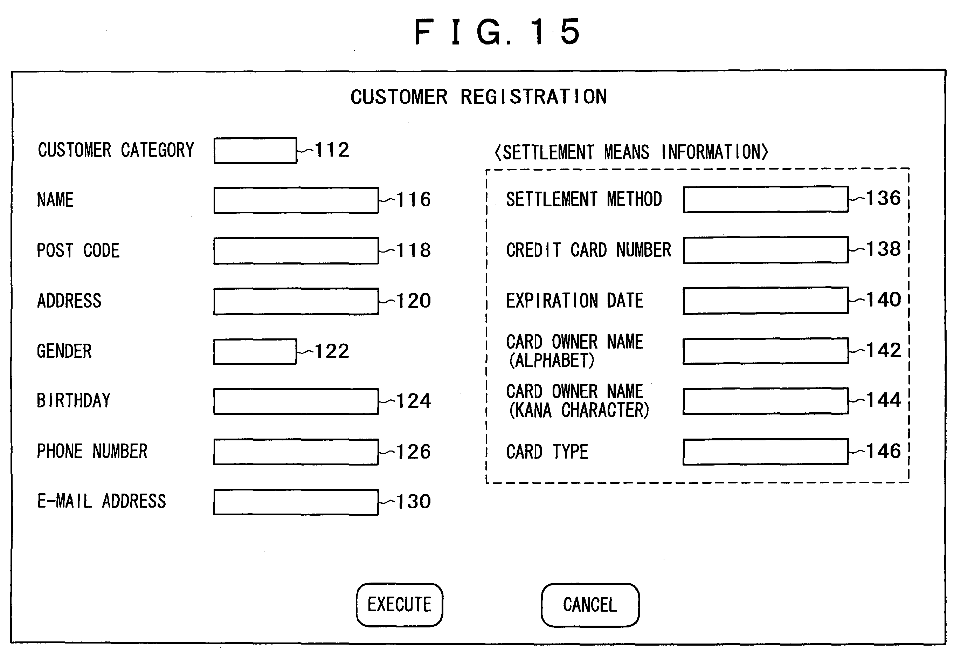

The following describes the registration of the customer 9. First, when the customer terminal apparatus 5 accesses the business entity apparatus 7, "Customer Registration" screen shown in FIG. 15 is displayed on the display block 54. "Customer Registration" screen is a Web screen which is displayed after the login by the customer terminal apparatus 5.

A shown in FIG. 15, "Customer Registration" screen is displayed on the display block 54. FIG. 15 illustrates a screen which is displayed on the display block 54 in the charging system according to the present embodiment.

As shown in FIG. 15, "Customer Registration" screen is made up of entries including an entry block 112 for entering customer category, an entry block 116 for entering customer name, an entry block 118 for entering post code, an entry block 120 for entering address, an entry block 122 for entering gender, an entry block 124 for entering birthday, an entry block 126 for entering phone number, an entry block 130 for entering e-mail address, an entry block 136 for entering settlement method, an entry block 138 for entering credit card number, an entry block 140 for entering expiration date, an entry block 142 for entering name of credit card owner (alphabet), an entry block 144 for entering name of credit card owner (Kana character), and an entry block 146 for entering credit card type.

Through the input block 53 of the customer terminal apparatus 5, the above-mentioned entry blocks 112 to 146 are filled with the information about the customer 9. Further, when "Execute" button in the "Customer Registration" screen shown in FIG. 15 is clicked, the customer terminal apparatus 5 generates the registration information for registering the customer 9.

When the customer registration information has been generated, the customer terminal apparatus 5 sends it to the business entity apparatus 7 via the network 3. The business entity apparatus 7 receives this information via the network 3.

The business entity apparatus 7 issues a unique customer ID to the received registration information and adds admission date and merchant ID for example, thereby generating customer profile information.

The generated customer profile information is sent by the business entity apparatus 7 to the charging apparatus 13 via the network 3. It should be noted that, before the customer profile information is sent to the charging apparatus 13, the business entity apparatus 7 has already logged in on the charging apparatus 13.

The reception block 23 of the charging apparatus 13 receives the customer profile information via the network 3. The reception block 23 then sends the received customer profile information to the customer database server 41.

The customer database server 41 stores the received customer profile information into the customer database. Upon the storage of the customer profile information, the registration of the customer 9 is completed.

It should be noted that the customer database server 41 extracts settlement means information from the customer profile information received from the business entity apparatus 7. The customer database server 41 relates the extracted settlement means information with the extracted customer profile information and stores the resultant information into the customer database. The settlement means information can be generated for each customer 9 and the plural pieces of settlement means information can be related with the customer profile information.

The settlement means information is configured at least by settlement method, credit card number, expiration date, card owner name (alphabet), card owner name (Kana character), and card type. The settlement means information is associated with the means of settling purchased products.

In "Customer Registration" screen for example, the settlement means information is configured at least by the information entered through the entry block 136, the entry block 138, the entry block 140, the entry block 142, the entry block 144, and the entry block 146.

It should be noted that the charging apparatus 13 sends the result of the registration of the above-mentioned customer profile information to the business entity apparatus 7 as the registration result information. The business entity apparatus 7 can send the received registration result information to the customer terminal apparatus 5.

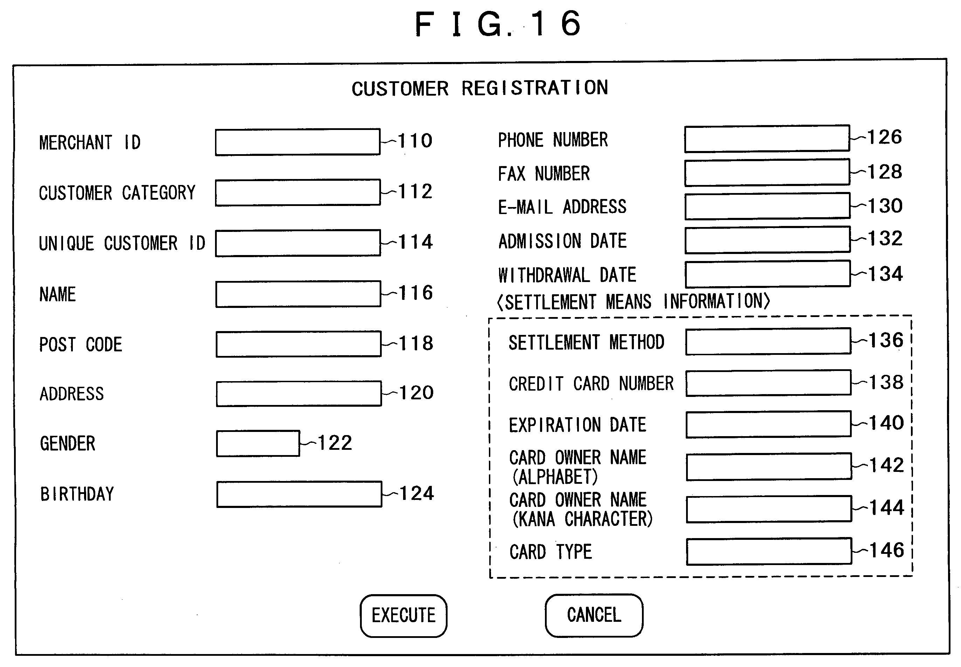

In addition to the above-mentioned registration of the customer 9 from the customer terminal apparatus 5, it is practicable to register the customer 9 from the business entity apparatus 7 according to the present embodiment. The following describes "Customer Registration" screen according to the present embodiment which is used to register the customer 9 from the business entity apparatus 7, with reference to FIG. 16.

Upon logging in on the charging apparatus 13 from the business entity apparatus 7, a management menu screen appears on the display block 74. When "Customer Registration" is selected on the management menu screen, "Customer Registration" screen shown in FIG. 16 appears.

As shown in FIG. 16, "Customer Registration" screen is configured by an entry block 110 for entering merchant ID, an entry block 112 for entering customer category, an entry block 114 for entering unique customer ID, an entry block 116 for entering name, an entry block 118 for entering post code, an entry block 120 for entering address, an entry block 122 for entering gender, an entry block 124 for entering birthday, an entry block 126 for entering phone number, an entry block 128 for entering fax number, an entry block 130 for entering e-mail address, an entry block 132 for entering admission date, an entry block 134 for entering withdrawal date, an entry block 136 for entering settlement method, an entry block 138 for entering credit card number, an entry block 140 for entering expiration date, an entry block 142 for entering credit card owner name (alphabet), an entry block 144 for entering credit card owner name (Kana character), and an entry block 146 for entering credit card type.

Through the input block 73 of the business entity apparatus 7, the above-mentioned entry blocks 110 to 146 are filled with the information about the customer 9. The registration information about the customer 9 is stored in the business entity apparatus 7 from the customer terminal apparatus 5 or sent to the merchant 10 from the customer 9 in advance. When "Execute" button in the "Customer Registration" screen shown in FIG. 16 is clicked after the entry of the registration information, the business entity apparatus 7 generates the registration information for registering the customer 9.

Having generated the customer profile information, the business entity apparatus 7 sends the generated customer profile information to the charging apparatus 13 via the network 3. Subsequently, substantially the same processing as the processing of registering the customer 9 from the customer terminal apparatus 5 takes place, so that its description will be skipped.

The customer profile information generated on the basis of the registration of the customer 9 is managed by the customer database server 41. Therefore, the business entity apparatus 7 need not manage the customer profile information on its own, thereby saving the management cost.

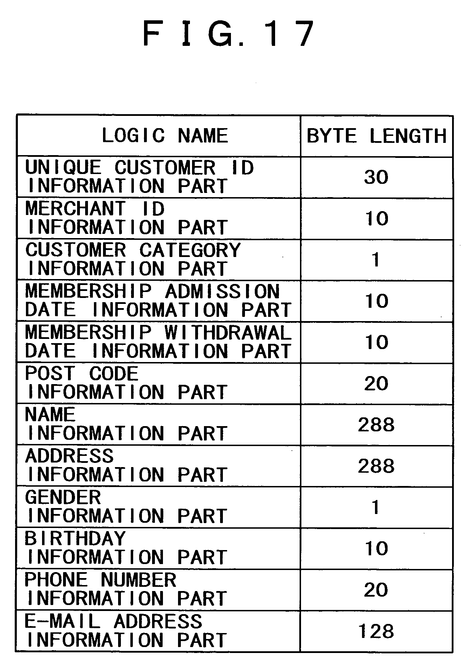

The following describes the customer profile information stored in the customer database according to an embodiment of the present invention with respect to FIG. 17. FIG. 17 illustrates the schematic data structure of the customer profile information stored in the customer database according to the present embodiment.

As shown in FIG. 17, the customer profile information is configured at least by a 30-byte unique customer ID information part, a 10-byte merchant ID information part, a 1-byte customer category information part, a 10-byte admission date information part, a 10-byte withdrawal date information part, a 20-byte post code information part, a 288-byte name information part, a 288-byte address information part, a 1-byte gender information part, a 10-byte birthday information part, a 20-byte phone number information part, and a 128-byte e-mail address information part.

### Searching the Customer 9

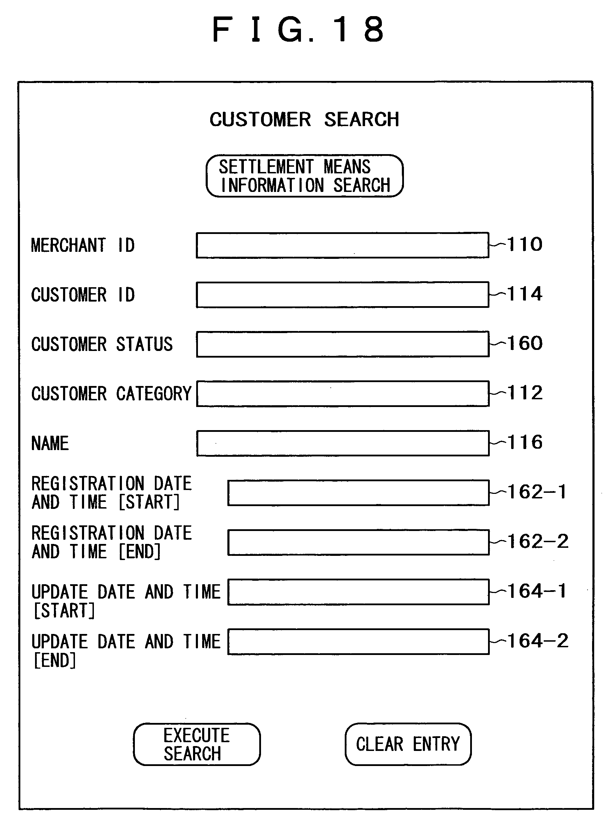

Further, the business entity apparatus 7 can search the customer database server 41 of the charging apparatus 13 for the customer profile information. When "Search Customer" item shown in FIG. 10 is selected after a login sequence, "Customer Search" screen shown in FIG. 18 appears on the display block 74. FIG. 18 illustrates a schematic configuration of a display screen applied to the charging system according to the present embodiment.

As shown in FIG. 18, "Customer Search" screen is configured by an entry block 110 for entering merchant ID, an entry block 114 for entering customer ID, an entry block 160 for entering customer status, an entry block 112 for entering customer category, an entry 116 for entering name, an entry block 162-1 for entering registration date and time (start) for setting search range, an entry block 162-2 for entering registration date and time (end) for setting search range, an entry block 164-1 for entering update date and time (start) for setting search range, and an entry block 164-2 for entering update date and time (end) for setting search range.

Through the input block 53 of the business entity apparatus 7, the above-mentioned entry blocks 110 to 164 are filled with the information about the customer 9. Further, when "Execute Search" button is clicked, the search execution data are generated. Based on the generated search execution data, the charging apparatus 13 searches for the customer profile concerned.

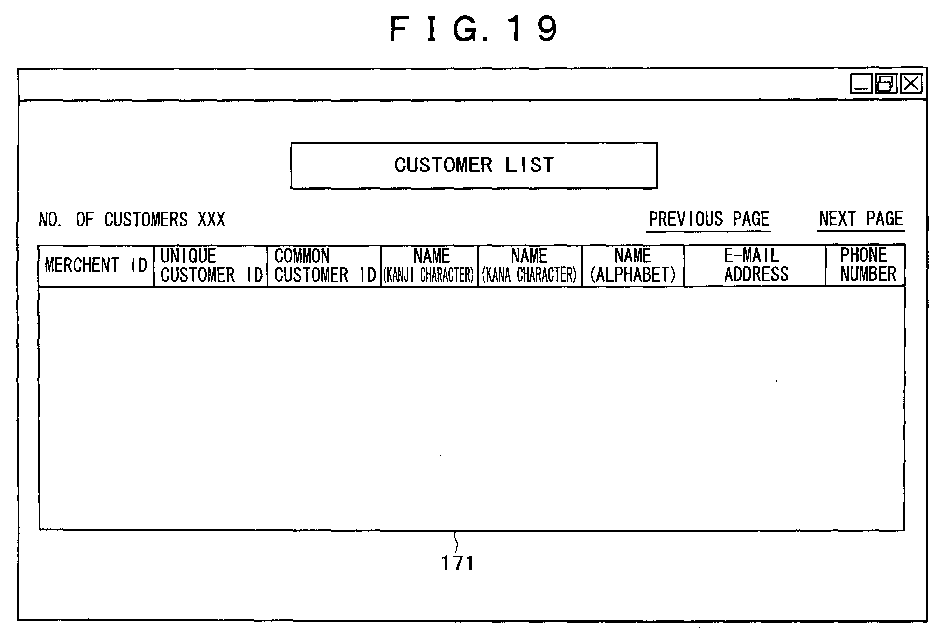

When the customer profile search has been completed, "Customer List" screen is displayed on the display block 74 as a result of the search operation as shown in FIG. 19. "Customer List" screen is configured by a list 171. The list 171 is configured by, but not exclusively, "Merchant ID" item, "Unique Customer ID" item, "Common Customer ID" item, "Name (Kanji character)" item, "Name (Kana character)" item, "Name (alphabet)" item, "E-mail Address" item, and "Phone Number" item.

On the above-mentioned "Customer Search" screen, a search operation is performed on the basis of search keys entered through entry blocks 110 to 164. As a result of the search, the customer profile information associated with the searched customer 9 is displayed as the list 171. Therefore, each user belonging to the business entity apparatus 7 can efficiently understand the desired customer information.

### Searching the Customer 9 (Settlement Means Information)

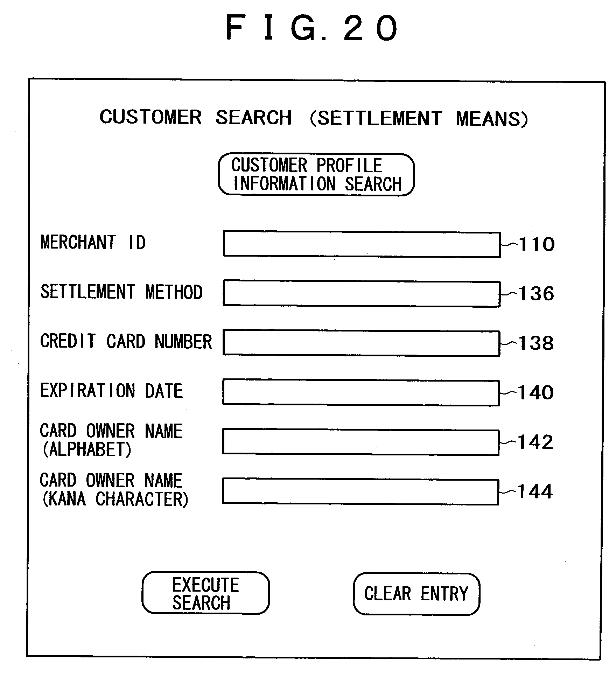

When "Settlement Means Information Search" button in the customer search screen shown in FIG. 18 is selected through the input block 73 of the business entity apparatus 7, "Customer Search (Settlement Means)" screen shown in FIG. 20 for performing a customer search operation from the settlement means information of the customer profile information is displayed on the display block 74. FIG. 20 illustrates a screen which appears on the display block of the charging system according to the present embodiment.

As shown in FIG. 20, "Customer Search (Settlement Means)" screen is configured by an entry block 110 for entering merchant ID, an entry block 136 for entering settlement method, an entry block 138 for entering credit card number, an entry block 140 for entering expiration date, an entry block 142 for entering credit card owner name (alphabet), and an entry block 144 for entering credit card owner name (Kana character).

Through the input block 53 of the business entity apparatus 7, the above-mentioned data are entered in the entry blocks 110 to 144 shown in FIG. 19. When "Execute Search" button is clicked, search execution data are generated. Based on the generated search execution data, the charging apparatus 13 searches for the settlement means information associated with the customer profile information concerned.

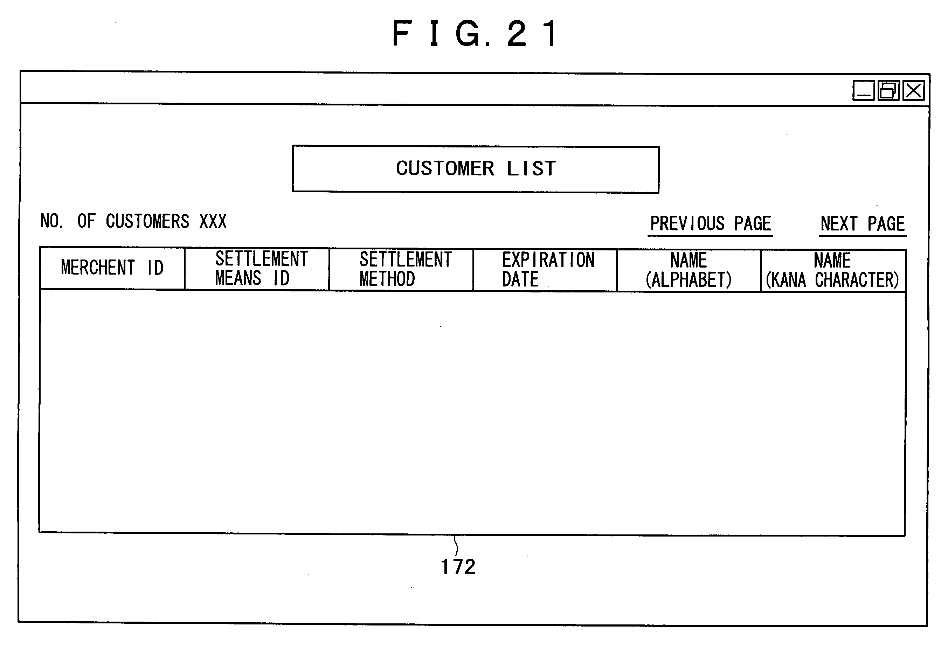

As shown in FIG. 21, "Customer List" screen is displayed as a result of searching for the settlement means information of the customer 9. "Customer List" screen is configured by a list 172. The list 172 is composed of "Merchant ID" item, "Settlement Means ID" item, "Settlement Method" item, "Expiration Date" item, "Name (alphabet)" item, and "Name (Kana character)" item.

As a search result, the customer information of the searched customer 9 is shown in the list 172. It should be noted that, on the above-mentioned "Customer Search (Settlement Means)" screen, a search operation is performed on the basis of the search keys associated with the entered settlement means. Therefore, each user belonging to the business entity apparatus 7 can efficiently understand the settlement means information of the desired customer 9.

### Customer Management Information

Further, the customer database server 41 of the charging apparatus 13 according to the present embodiment can manage the customer management information associated with the customer 9, in addition to the management of customer profile information. The customer management information is used by the merchant 10 for sale promotion for example. Therefore, the customer management information is different for each merchant 10.

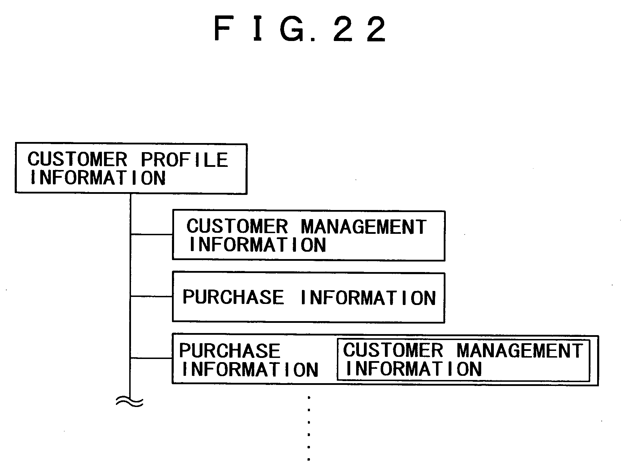

The following describes the customer management information according to the present embodiment with reference to FIG. 22. FIG. 22 shows a schematic configuration of the customer management information according to the present embodiment.

As shown in FIG. 22, the customer management information is related to the customer profile information of the customer 9 concerned by the customer management information relating server 42 and stored in the customer database.

As shown in FIG. 22, the customer management information relating server 42 can add plural pieces of customer management information below one piece of customer profile information. It should be noted that purchase information which is generated when products are purchased or settlement means information for example are also added below the customer profile information.

Further, as shown in FIG. 22, it is also practicable for the customer management information to be included in purchase information. With the purchase information in which the customer management information is included, a reserved area in the generated purchase information is allocated as the customer management information.

The merchant 10 side must manage the information such as birthdays for each customer 9 in cases where 5% discount is applied to the birthday of the customer 9, 5% discount is applied when baseball team A, the favorite team of the customer 9 wins, or 5% discount is applied during March for example for the regular customer 9.

Consequently, by setting the information such as birthday and favorite baseball team name for example for each customer 9 to the customer management information of the customer 9, the merchant 10 can design to enhance the sale promotion of products.

In addition to predefined codes or formatted text information, it is also practicable for the customer management information to be configured by non-formatted text information or images.

The customer database server 41 can also provide the customer management information to the business entity apparatus 7 of the merchant 10. Therefore, by making public the customer management information to other merchants 10 than that with which the customer 9 is registered, the enhancement of service quality, the enhancement of competition, and product sale promotion can be achieved among the merchants 10.

By making public the customer management information, the charging apparatus 13 can also get paid, through the business entity apparatus 7, for the provision of the customer management information from those merchants 10 which browsed this information. It should be noted that the customer management information relating server 42 can modify, change, or otherwise manipulate from time to time the customer information attached to the customer profile information.

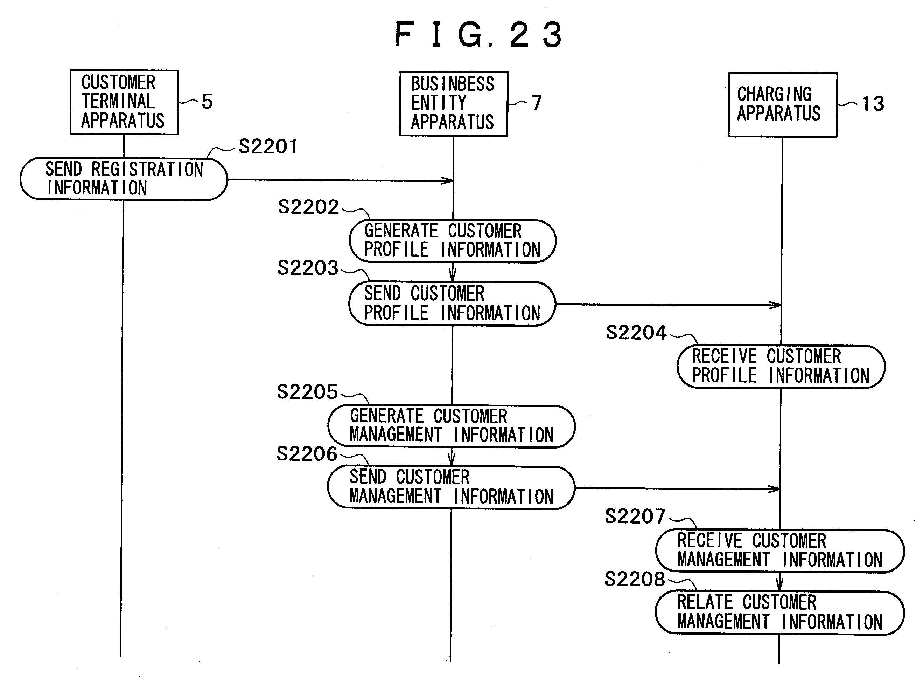

The following describes the processing of relating the customer management information according to the present embodiment with the customer profile information, with reference to FIG. 23. FIG. 23 illustrates a timing chart indicative of the outline of the processing of relating the customer management information according to the present embodiment.

First, as shown in FIG. 23, if the customer 9 has not yet been registered, with the customer profile information of the customer 9 not stored in the charging apparatus 13, then the customer terminal apparatus 5 generates the registration information associated with the customer 9 and sends the generated registration information to the business entity apparatus 7 via the network 3 (S2201). It should be noted that the registration information is generated in the same manner as described above.

As described above, receiving the registration information from the customer terminal apparatus 5 via the network 3, the business entity apparatus 7 adds a merchant ID for example to the received information, thereby generating the customer profile information (S2202).

Having generated the customer profile information (S2202), the business entity apparatus 7 sends this information to the charging apparatus 13 (S2203).

Next, the customer profile information is received by the reception block 23 of the charging apparatus 13 via the network 3 (S2204).

As described above, the reception block 23 sends the received customer profile information to the customer database server 41. The customer database server 41 stores the received information into the customer database.

If the customer profile information is stored in the customer database server 41 of the charging apparatus 13, then the business entity apparatus 7 can attach the customer management information. The business entity apparatus 7 generates the customer management information set with the information to be managed for each customer 9 (S2205). It should be noted that the customer management information is entered through the input block 73 on "Customer Management Information" screen, not shown, displayed on the display block 74 of the business entity apparatus 7.

Next, the business entity apparatus 7 sends the generated customer management information to the charging apparatus 13 via the network 3 (S2206).

The reception block 23 of the charging apparatus 13 receives the customer management information from the business entity apparatus 7 via the network 3 (S2207). The reception block 23 sends the received information to the customer database server 41.

Having received the customer management information, the customer database server 41 searches for the customer profile information of the customer 9 concerned on the basis of the unique customer ID or the common customer ID included in the customer management information.

When the customer profile information has been retrieved, the customer database server 41 sends it to the customer management information relating server 42. The customer management information relating server 42 relates the customer profile information concerned with the customer management information (S2208). The related customer profile information and customer management information are stored in the customer database server 41.

The related customer management information is stored by the customer database server 41 into the customer database. The relation between the customer profile information and the customer management information allows the customer database server 41 to collectively get one or more pieces of customer management information bound to the customer profile information by accessing it.

In the above-mentioned example, the customer management information according to the present embodiment is generated by the business entity apparatus 7. However, the generation of the customer management information is not restricted to this configuration. For example, it is also practicable to generate the customer management information by the customer terminal apparatus 5.

If the customer management information is generated by the customer terminal apparatus 5, then the customer management information of each customer 9 generated by each customer terminal apparatus 5 is sent to the charging apparatus 13 via the business entity apparatus 7. Therefore, the customer terminal apparatus 5 must access the business entity apparatus 7 in advance to execute a login sequence.

Since the customer profile information or the customer management information is managed by the charging apparatus 13, the business entity apparatus 7 need not manage the security information such as credit card and settlement information for example.

### Charging Customer Information

Charging customer information is configured by at least merchant ID, unique customer ID, charging customer ID, and settlement means ID. The charging customer ID identifies charging customer information and the settlement means ID identifies the settlement means information for charging settlement. The settlement means ID is issued every time a product is purchased.

The charging customer information is generated for each customer 9 and charging and billing is processed in unit of the above-mentioned charging customer information. Therefore, if the same customer 9 is registered with the plural merchants 10 and therefore has the same unique customer ID, billing or charging can be processed for each merchant 10. Charging or billing is processed on the basis of the charging customer information and, as required, by referencing the customer profile information.

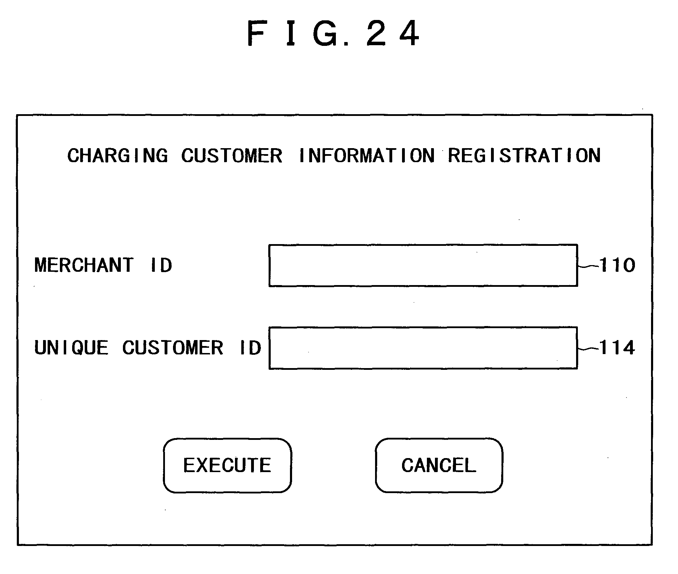

In the registration of the charging customer information according to the present embodiment, "Charging Customer Information Registration" screen shown in FIG. 24 appears on the display block 74 of the business entity apparatus 7. "Charging Customer Information Registration" screen is displayed when "Register Charging Customer Information" item of "Management Menu" screen shown in FIG. 10 is selected.

"Charging Customer Information Registration" screen is configured by an entry block 110 for entering merchant ID and an entry block 114 for entering unique customer ID. Merchant ID and unique customer ID are entered in these entry blocks and "Execute" button is clicked through the input block 73.

When "Execute" button is clicked, the business entity apparatus 7 generates the charging customer registration information for registering the charging customer information and sends the generated information to the charging apparatus 13 via the network 3.

The charging customer registration information is configured by, but not exclusively, 10-byte merchant ID and 30-byte unique customer ID.

Receiving the charging customer registration information, the reception block 23 of the charging apparatus 13 sends the received information to the customer database server 41. Receiving the charging customer registration information, the customer database server 41 issues charging customer ID and settlement means information ID.

The customer database server 41 attaches the above-mentioned charging customer ID and settlement means information ID to the customer registration information and processes them into the charging customer information. The customer database server 41 stores the resultant charging customer information into the customer database.

### Relating Purchase Plan Information with Products

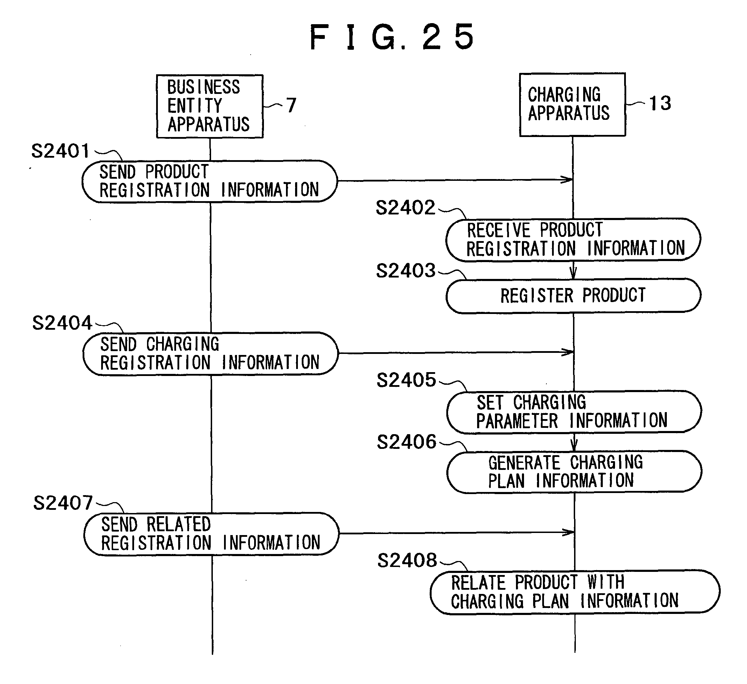

The following describes the processing of relating products with charging plan information according to the present embodiment with reference to FIG. 25. FIG. 25 illustrates a timing chart indicative of the outline of the processing of relating products with charging plan information according to the present embodiment.

### Registration of Products

First, as shown in FIG. 25, the business entity apparatus 7 must generate product registration information to register products with the charging apparatus 13 (S2401). Therefore, before describing the processing of relating products with charging plan information, the processing of registering products will be described.

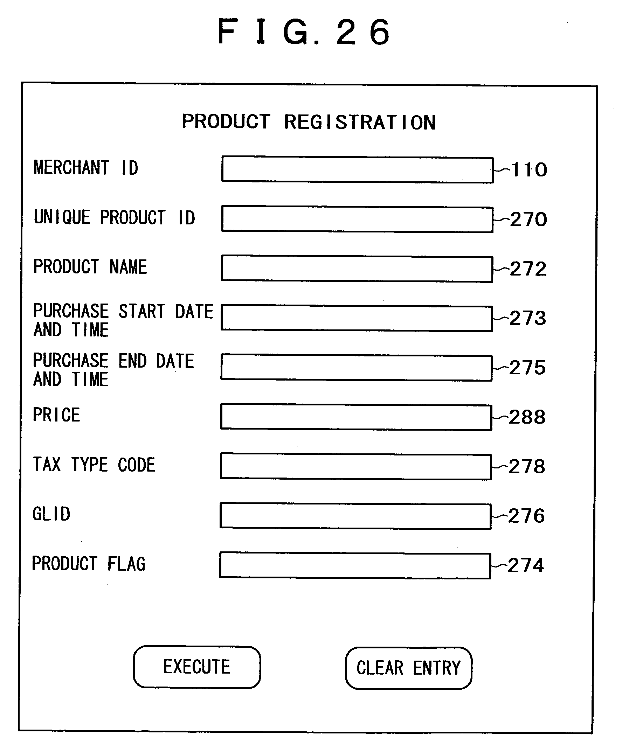

As shown in FIG. 26, to register products, it is necessary to make registration through "Product Registration" screen displayed on the display block 74 of the business entity apparatus 7. It should be noted that "Product Registration" screen is displayed when, after login sequence, "Product" in "Management Menu" screen shown in FIG. 10 is selected.

"Product Registration" screen shown in FIG. 26 is configured by at least an entry block 110 for entering merchant ID, an entry block 270 for entering unique product ID, an entry block 272 for entering product name, an entry block 288 for entering price, an entry block 278 for entering tax type, an entry block 276 for entering GLID, and an entry block 274 for entering product flag.

The product information is entered in the entry blocks 110 to 288 shown in FIG. 26 from the input block 73 of the business entity apparatus 7 and "Execute" button is clicked. When "Execute" button is clicked, the registration block 69 of the business entity apparatus 7 generates the product registration information for product registration on the basis of the information entered in the input blocks 110 to 288. It should be noted that clicking "Clear Entry" button clears the entered information.

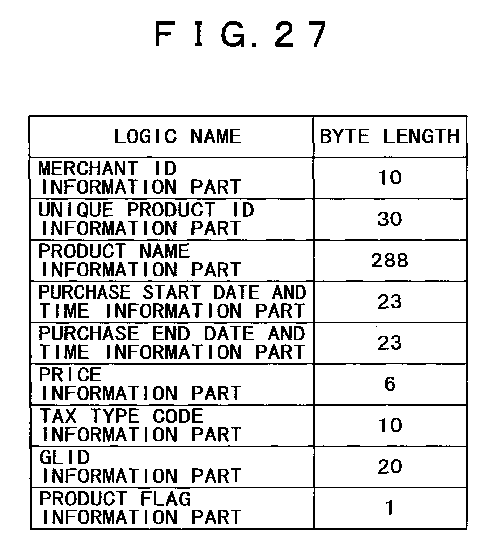

The following describes the product registration information according to the present embodiment with reference to FIG. 27. FIG. 27 illustrates the outline of the data structure of the product registration information according to the present embodiment.

As shown in FIG. 27, the product registration information is configured by at least a 10-byte merchant ID information part, a 30-byte unique product ID information part, a 288-byte product name information part, a 23-byte purchase start date and time information part, a 23-byte purchase end date and time information part, a 6-byte price information part, a 10-byte tax type code information part, a 20-byte GLID information part, and a 1-byte product flag information part.

To the merchant ID information part, the merchant ID entered in the entry block 110 is set. To the unique product ID information part, the unique product ID entered in the entry block 270 is set. To the product name information part, the product name entered in the entry block 272 is set. To the purchase start date and time information part, the purchase start date and time entered in the entry block 273 is set. To the purchase end date and time information part, the purchase end date and time entered in the entry block 275 is set. To the price information part, the price entered in the entry block 288 is set. To the tax type code information part, the tax type code entered in the entry block 278 is set. To the GLID information part, the GLID entered in the entry block 276 is set. To the product flag information part, the product flag entered in the entry block 274 is set.

In the above-mentioned example, the product registration information according to the present embodiment is described with the information such as discount amounts not included. However, this information is not restricted to this configuration. For example, it is also practicable for the product registration information to include discount amounts or discount coefficients. In this case, "Product Registration" screen has an entry block for entering discount amounts or discount coefficients.

Next, as shown in FIG. 25, the transmission block 71 of the business entity apparatus 7 sends the generated product registration information to the charging apparatus 13 via the network 3 (S2401). The reception block 23 of the charging apparatus 13 receives this product registration information from the business entity apparatus 7 (S2402).

The reception block 23 of the charging apparatus 13 sends the received product registration information to the product database server 46. The product database server 46 issues a common product ID and stores the issued common product ID and the received product registration information into the product database. Upon completion of this storage, the product is registered (S2403).

### Registration of Charging Plan Information

Along with the product registration according to the present embodiment, the charging plan information for charging the customer 9 who purchased the product is registered. The charging plan information is registered by sending a charging parameter from the business entity apparatus 7 to the charging apparatus 13.

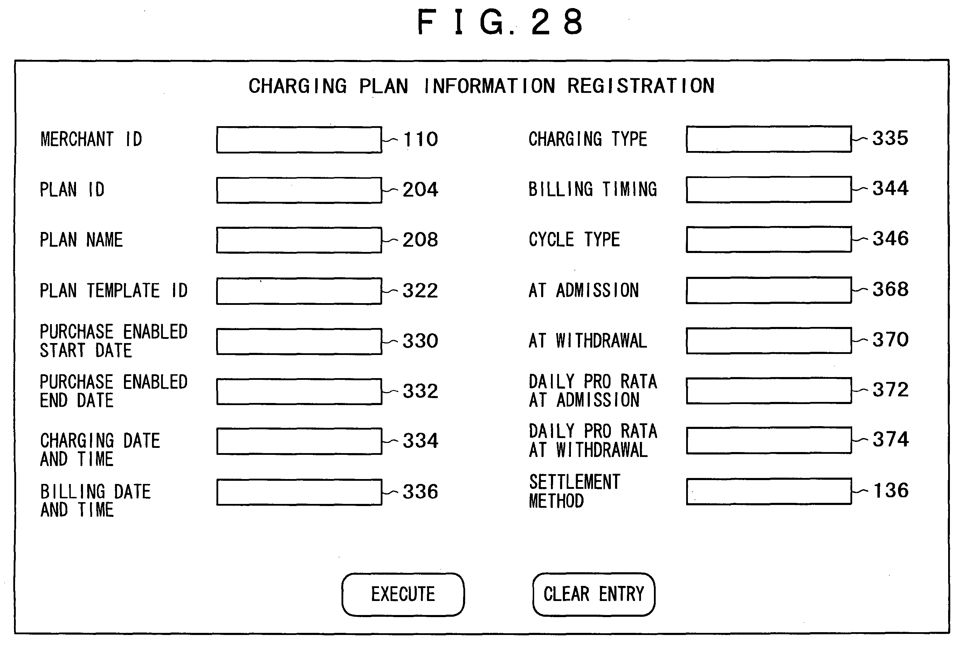

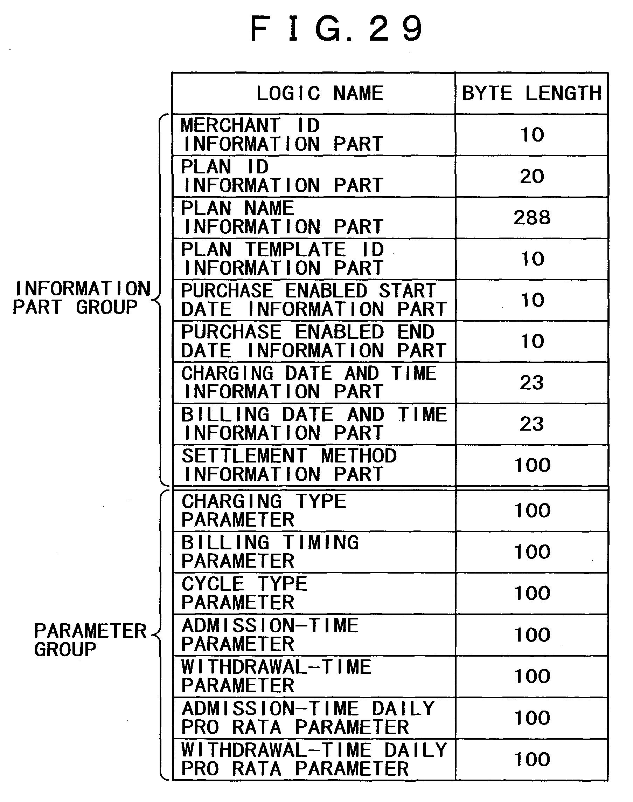

The following describes the registration of charging plan information according to the present embodiment with reference to FIGS. 25, 28, and 29. FIG. 28 illustrates a schematic configuration of a display screen applied to the charging system according to the present embodiment. FIG. 29 illustrates the outline of the data structure of the charging parameter information according to the present embodiment.

As shown in FIG. 28, the registration of charging plan information requires the registration of the charging plan information from "Charging Plan Information Registration" screen displayed on the display block 74 of the business entity apparatus 7.

It should be noted that "Charging Plan Information Registration" screen is displayed when, after the business entity apparatus 7 has logged in on the charging apparatus 13, "Charging Plan Information" is selected on "Management Menu" screen shown on FIG. 10. "Charging Plan Information Registration" screen shown in FIG. 28 is configured by at least an entry block 110 for entering merchant ID, an entry block 204 for entering plan ID for identifying charging plan information, an entry block 208 for entering plan name of charging plan information, and entry block 322 for entering plan template ID for identifying charging plan template, an entry block 330 for entering purchase enabled start date, an entry block 332 for entering purchase enabled end date, an entry block 334 for entering charging date and time, an entry block 336 for entering billing date and time, an entry block 335 for entering charging type information, an entry block 344 for entering billing timing information, an entry block 346 for entering cycle type information, an entry block 368 for entering an item which is specially calculated at admission, an entry block 370 for entering an item which is specially calculated at withdrawal, an entry block 372 for entering whether to make daily pro rata calculation at admission, an entry block 374 for entering whether to make daily pro rata calculation at withdrawal, and an input block 136 for entering a settlement method.

The information associated with charging plan information is entered in the entry blocks 110 to 374 from the input block 73 of the business entity apparatus 7 and "Execute" button is clicked. When "Execute" button is clicked, the registration block 69 of the business entity apparatus 7 generates charging plan information on the basis of the entered information, thereby generating the charging registration information which includes the setting values for registration. It should be noted that clicking "Clear Entry" button clears the entered information.

It should be noted that, in the above-mentioned entry block 204, a plan template ID is entered. As shown in FIG. 6, a charging plan template is selected in accordance with a plan template ID to be set.

To the above-mentioned entry block 330, the start date on which charging is enabled is set as purchase enabled start date, but not exclusively; for example, a start date and time on which charging is enabled, such as 10:05, January 5, 2003, may be set.

To the above-mentioned entry block 332, a date on which charging ends is set as the purchase enabled end date, but not exclusively; for example, an end date and time on which charging ends, such as 11:05, February 15, 2011, may be set.

To the entry block 334, a date on which charging is processed is set. For example, if the use of service, which is a product, is contracted by monthly charging, from purchase enabled start date of October 1, 2002 up to October 30, 2002, the charging date for pre-billing information in the charging plan information of flat-rate charging is set to 00:00:00, November 01, 2002 and the post-billing information charging date is set to 23:59:59, October 31, 2002, for example. In the case of one-time rate charging plan information, the charging date is kept initially set.

To the above-mentioned entry block 335, charging type information is set. The charging type information is one of "1" (one-time rate) and "2" (flat-rate), but not exclusively; for example, "3" (metered-rate) may be added. If the charging type information is different from that set by the charging plan template beforehand, it is still practicable if a charging type is set to the entry block 335.

To the entry block 336, a date on which billing processing for the charging is executed is set. For example, if the use of service, which is a product, is contracted by monthly charging, from purchase enabled start date of October 1, 2002 up to October 30, 2002, the charging date for pre-billing information in flat-rate charging is set to 23:59:59, October 31, 2002 and the flat-rate post-billing information charging date is set to 23:59:58, October 31, 2002, for example. In the case of one-time rate charging plan information, the charging date is kept initially set.

To the entry block 344, one of "0" (one-time rate), "1" (pre-billing), and "2" (post-billing) is set. It should be noted that one-time rate billing is set in the case of the registration of one-time rate charging plan information.

It should be noted that, to the entry block 344 according to the present embodiment, one of "0" (one-time rate), "1" (pre-billing), and "2" (post-billing) is set, but not exclusively.

To the entry block 346, one of "1" (yearly) and "2" (monthly) is set as described before. It should be noted that, to the entry block 346, one of "1" (yearly" and "2" (monthly) is set, but not exclusively.

To the entry block 368, a setting value of special calculation 1 which is processed at admission to membership is set. The contents of the processing of special calculation 1 are predetermined. For example, if the contents of processing are predetermined to "free of charge for three months", the setting value "3" may be changed to "4" or "5" for example, thereby changing the free-of-charge period.

It should be noted that the contents of the processing of special calculation 1 according to the present embodiment are not restricted to "free of charge for three months". For example, it is also practicable to select desired one of a plurality of contents of processing or the contents of processing are changed from time to time.

To the entry block 370, the setting value of special calculation 2 which is processed at the time of withdrawal from membership is set. This setting value is substantially the same in configuration as that of the above-mentioned special calculation 1 and the processing contents of special calculation 2 are also predetermined. For example, if the contents of processing are predetermined to "registration fee 10% refund", the setting value "10" may be changed to "20" or "30" for example, thereby changing the refund amount of registration fee.

It should be noted that the processing contents of special calculation 2 according to embodiments of the invention are not restricted to "registration fee 10% refund". For example, it is also practicable to select desired one of a plurality of contents of processing or the contents of processing are changed from time to time.

To the entry block 372 and the entry block 374, daily pro rata at admission to membership and daily pro rata at withdrawal from membership are set respectively. To the entry block 136, a settlement method for charging plan information is set. Settlement methods herein include credit card, bank transfer, bank withdrawal, and so on for example, one of which is selected.

The following describes the charging registration information according to the present embodiment with reference to FIG. 29. FIG. 29 illustrates the outline of the data structure of the charging registration information according to the present embodiment.

As shown in FIG. 29, the charging parameter information is configured by an information part group and a parameter group.

The above-mentioned information part group is configured by at least a 10-byte merchant ID information part, a 20-byte plan ID information part, a 288-byte plan name information part, a 10-byte plan template ID information part, a 10-byte purchase enabled start date information part, a 10-byte purchase enabled end date information part, a 23-byte charging date and time information part, a 23-byte billing date and time information part, and a 100-byte settlement method information part.

The above-mentioned parameter group is configured by at least a 100-byte charging type parameter, a 100-byte billing timing parameter, a 100-byte cycle type parameter, a 100-byte admission-time parameter, a 100-byte withdrawal-time parameter, a 100-byte admission-time daily pro rata parameter, and a 100-byte withdrawal-time daily pro rata parameter.

To the merchant ID information part, the merchant ID entered in the entry block 110 is set. To the plan ID information part, the plan ID entered in the entry block 204 is set. To the plan name information part, the plan name set to the entry block 208 is set. To the plan template ID information part, the plan template entered in the entry block 322 is set. To the settlement method information part, the settlement method entered in the entry block 136 is set.

To the purchase enabled start date information part, the purchase enabled start date entered in the entry block 330 is set. To the purchased enabled end date information part, the purchased enabled end date entered in the entry block 332 is set. To the charging date and time information part, the charging date and time entered in the entry block 334 is set. To the billing date and time information part, the billing date and time entered in the entry block 336 is set.

To the charging type parameter, the charging type information entered in the entry block 335 is set. To the billing timing parameter, the billing timing entered in the entry block 344 is set. To the cycle type parameter, the cycle type information entered in the entry block 346 is set. To the admission-time parameter, the setting value at admission entered in the entry block 368 is set. To the withdrawal-time parameter, the setting value at withdrawal entered in the entry block 370 is set. To the admission-time daily pro rata parameter, whether daily pro rata calculation is executed or not entered in the entry block 372 is set. To the withdrawal-time daily pro rata parameter, whether daily pro rata calculation is executed or not entered in the entry block 374 is set.

Next, as shown in FIG. 25, the transmission block 71 of the business entity apparatus 7 sends the generated charging registration information to the charging apparatus 13 via the network 3 (S2404). The reception block 23 of the charging apparatus 13 receives this charging registration information from the business entity apparatus 7.

Next, the reception block 23 of the charging apparatus 13 sends the received charging registration information to the charging plan information generation server 33. The charging plan information generation server 33 gets the setting value of the above-mentioned parameter group included in the received charging registration information, thereby setting the charging parameter information (S2405).

To get the charging plan template corresponding to the charging plan template ID, the charging plan information generation server 33 queries the charging plan template database server 48.

In response, on the basis of the charging plan template ID, the charging plan template database server 48 searches for the corresponding charging plan template and retrieves it. Further, the charging plan template database server 48 sends the retrieved charging plan template to the charging plan information generation server 33.

The charging plan information generation server 33 sets the received charging parameter information to the charging plan template, thereby generating the charging plan information (S2406). The charging plan information generation server 33 stores the generated charging plan information, thereby completing the registration of the charging plan information. It should be noted that the information set to the information part group included in the charging registration information is also added to the charging plan information.

It is practicable that, after the registration of the charging plan information according to the present embodiment, the business entity apparatus 7 accesses the charging plan information generation server 33 to change or delete the registered charging plan information.

It should be noted that, if the charging type information according to the present embodiment is one-time rate type charging information, the charging plan information generated beforehand may be supplied from the business entity apparatus 7 immediately before charging, rather than registering the charging plan information with the charging plan information generation server 33 of the charging apparatus 13 beforehand.

In the above-mentioned example, the charging type information according to the present embodiment is of flat-rate type or one-time rate type. However, the charging type information is not restricted to this configuration. For example, the charging type information may also be of metered-rate type in which charging is executed on the time of use, time-zone variable type in which amounts charged vary in accordance with time zone, and particular-time variable type in which amounts charged and so on vary in particular times.

For example, with the metered-rate charging information, amounts charged vary in accordance with the time of use and the number of times. With the time-zone variable type charging information, charging is executed in only particular time zones or on particular days of the week. With the particular-time variable type charging information, charging is executed in July and August for example every year at lower rates than usual.

### Relating Products with Charging Plan Information

When the registration of the product and charging plan information has been completed, the processing is executed to relate products with the charging plan information so as to provide products to the customer 9. Next, the processing of relating products with charging plan information according to the present embodiment will be described.

As shown in FIG. 25, in the processing of relating products with the charging plan information, the business entity apparatus 7 generates relation registration information. The generated information is sent to the charging apparatus 13 (S2407), thereby bonding desired products with the charging plan information.

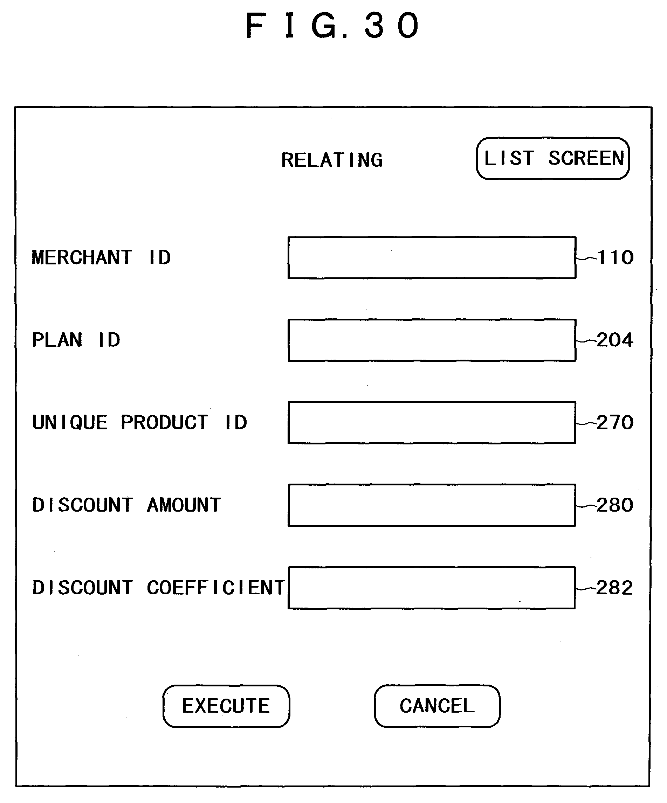

For the above-mentioned relation registration information, it is necessary to select a product to be related and the charging plan information from "Relate" screen displayed on the display block 74 of the business entity apparatus 7. The following describes "Relate" screen according to the present embodiment with reference to FIG. 30. FIG. 30 illustrates the display screen applied to the charging system according to the present embodiment.

As shown in FIG. 30, "Relate" screen is configured by at least an entry block 110 for entering merchant ID, an entry block 204 for entering plan ID for identifying charging plan information, an entry block 270 for entering unique product ID of product managed by merchant 10, an entry block 280 for setting discount amount from the price of purchased product, and an entry block 282 for setting discount coefficient for the price of purchased product.

It should be noted that "Relate" screen is displayed by selecting "Relate" item in "Management Menu" shown in FIG. 10 after the business entity apparatus 7 logs in on the charging apparatus 13.

Through the input block 73 of the business entity apparatus 7, the information such as unique product ID or plan ID is entered in the entry blocks 110 to 282 shown in FIG. 28 and "Execute" button is selected.

In the above-mentioned example, "Relate" screen according to the present embodiment is used to set one plan ID and one unique product ID. However, the setting through this screen is not restricted to this configuration. For example, a plurality of unique product IDs may be set for one plan ID.

In the above-mentioned example, "Relate" screen is used to set the unique product ID managed by the merchant 10. However, the use of this screen is not restricted to this configuration. For example, this screen may be used to set the common product ID issued by the charging apparatus 13.

When "Execute" button is clicked, the registration block 69 of the business entity apparatus 7 generates the relation registration information for binding the product with the charging plan information on the basis of the information entered through the entry blocks 110 to 282 shown in FIG. 30. It should be noted that clicking "Clear Entry" button deletes the information entered through the entry blocks 110 to 282.

To the entry block 280, a discount amount is set. The discount amount denotes an amount for deducting a predetermined amount from the price of the purchased product. The discount amount can be set by the merchant 10 appropriately, in a range of "¥ -99999" to "¥ 99999" for example, but not exclusively.

To the entry block 282, a discount coefficient is entered. The discount coefficient denotes a discount rate for the deduction from the price of the purchased product such as "0.8", i.e., 80% discount. In the case of 50% discount, "0.5" is entered in the entry block 282 for example, but not exclusively.

It should be noted that only one of discount amount and discount coefficient can be specified. Therefore, one of discount amount and discount coefficient is entered in the entry block 280 or the entry block 282.

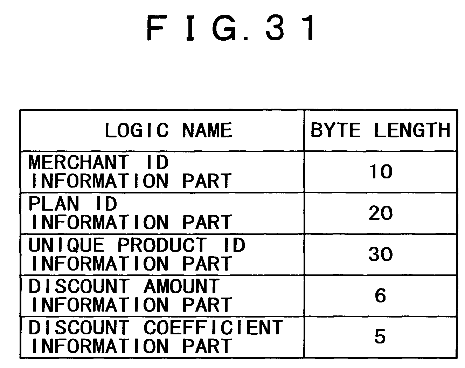

The following describes the relation registration information according to the present embodiment with reference to FIG. 31. FIG. 31 illustrates the outline of the data structure of the relation registration information according to the present embodiment.

As shown in FIG. 31, the relation registration information is configured by at least a 10-byte merchant ID information part, a 20-byte plan ID information part, a 30-byte unique product ID information part, a 6-byte discount amount information part, a 5-byte discount coefficient information part.

To the merchant ID information part, the merchant ID entered in the entry block 110 is set. To the plan ID information part, the plan ID entered in the entry block 204 is set. To the unique product ID information part, the unique product ID entered in the entry block 270 is set. To the discount amount information part, the discount amount entered in the entry block 280 is set. To the discount coefficient information part, the discount coefficient entered in the entry block 282 is set.

When "Execute" button on the "Relate" screen shown in FIG. 30 is clicked, the business entity apparatus 7 generates relation registration information.

Next, as shown in FIG. 25, the transmission block 71 of the business entity apparatus 7 sends the generated relation registration information to the charging apparatus 13 via the network 3 (S2407). The reception block 23 of the charging apparatus 13 receives the relation registration information from the business entity apparatus 7.

The reception block 23 of the charging apparatus 13 sends the received relation registration information to the relating server 34. To get the charging plan information corresponding to the plan ID and the product corresponding to the unique product ID, the relating server 34 queries the charging plan information generation server 33 and the product database server 46.

On the basis of the plan ID, the charging plan information generation server 33 searches for the corresponding charging plan information and retrieves it. Further, the charging plan information generation server 33 sends the retrieved charging plan information to the relating server 34.

On the basis of the unique product ID, the product database server 46 searches for the corresponding product and retrieves it. Further, the product database server 46 sends the retrieved product to the relating server 34. It is also practicable that the product database server 46 according to the present embodiment searches for the corresponding product after converting the unique product ID into the common product ID.

By relating the charging plan information with the product (S2408), the relating server 34 generates traded product data. The generated traded product data are stored in a traded product database stored in the product database server 46.

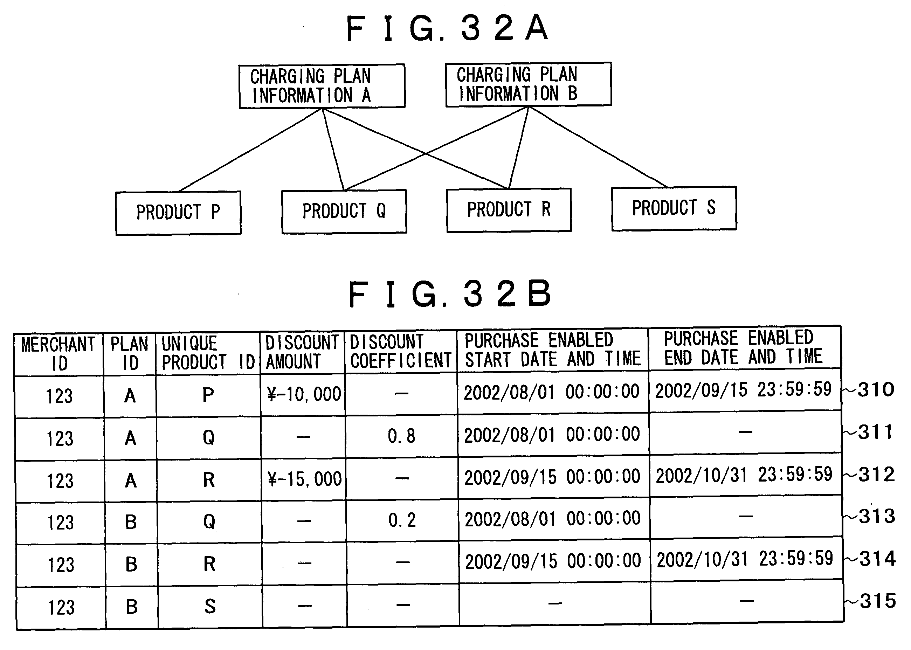

The following describes the traded product database according to the present embodiment with reference to FIGS. 32A and 32B. FIGS. 32A and 32B illustrate a schematic configuration of the traded product database according to the present embodiment.

As shown in FIG. 32A, the charging apparatus 13 holds the registrations of charging plan information A, charging plan information B, product P, product Q, product R, and product S.

Charging plan information A is related with product P, product Q, and product R. Charging plan information B is related with product Q, product R, and product S.

The traded product database is configured by one or more pieces of traded product data. It should be noted that, if no traded product data exist, it indicates that there is no products that can be provided to the customer 9.

As shown in FIG. 32B, the traded product data are configured by merchant ID, plan ID, unique product ID, discount amount, discount coefficient, purchase enabled start date and time, and purchased enabled end date and time. It should be noted that the purchase enabled start date and time and purchased enabled end date and time of the traded product data according to the present embodiment are retrieved from the product database; however, if these pieces of information are not stored in the product database, they are retrieved from the purchase enabled start date and time and purchase enabled end date and time of the charging plan information.

As shown in FIG. 32B, the traded product database is configured by traded product data 310, traded product data 311, traded product data 312, traded product data 313, traded product data 314, and traded product data 315.

In the traded product data 310, charging plan information A is related with product P. In traded product data 310, merchant ID is "123", plan ID is "A", unique product ID is "P", discount amount is "¥ -10,000", discount coefficient is "not set", purchase enabled start date and time is "2002/08/01 00:00:00", and purchase enabled end date and time is "2002/09/15 23:59:59".

In the traded product data 311, charging plan information A is related with product Q. In the traded product data 311, merchant ID is "123", plan ID is "A", unique product ID is "Q", discount amount is "not set", discount coefficient is "0.8" (80% discount), purchase enabled start date and time is "2002/08/01 00:00:00", and purchase enabled end date and time is "not set".

In the traded product data 313, charging plan information B is related with product Q. In the traded product data 313, merchant ID is "123", plan ID is "B", unique product ID is "Q", discount amount is "not set", discount coefficient is "0.2" (20% discount), purchase enabled start date and time is "2002/08/01 00:00:00", and purchase enabled end date and time is "not set".

In the traded product data 314, charging plan information B is related with product R. In the traded product data 314, merchant ID is "123", plan ID is "B", unique product ID is "R", discount amount is "not set", discount coefficient is "not set", purchase enabled start date and time is "2002/09/15 00:00:00", and purchase enabled end date and time is "2002/10/31 23:59:59".

In the traded product data 315, charging plan information B is related with product S. In the traded product data 315, merchant ID is "123", plan ID is "B", unique product ID is "S", discount amount is "not set", discount coefficient is "not set", purchase enabled start date and time is "not set", and purchase enabled end date and time is "not set".

In the above-mentioned example, unique product ID is set to the traded product database according to the present embodiment. However, the traded product database is not restricted to this configuration. For example, the common product ID issued by the charging apparatus 13 may be set.

The customer 9 selects traded product data from among the data constituting the traded product database to purchase desired products. The merchant 10 can automatically charge the customer 9 for the charging settlement for the purchased products in accordance with the charging plan information registered beforehand.

### Traded Product Database List

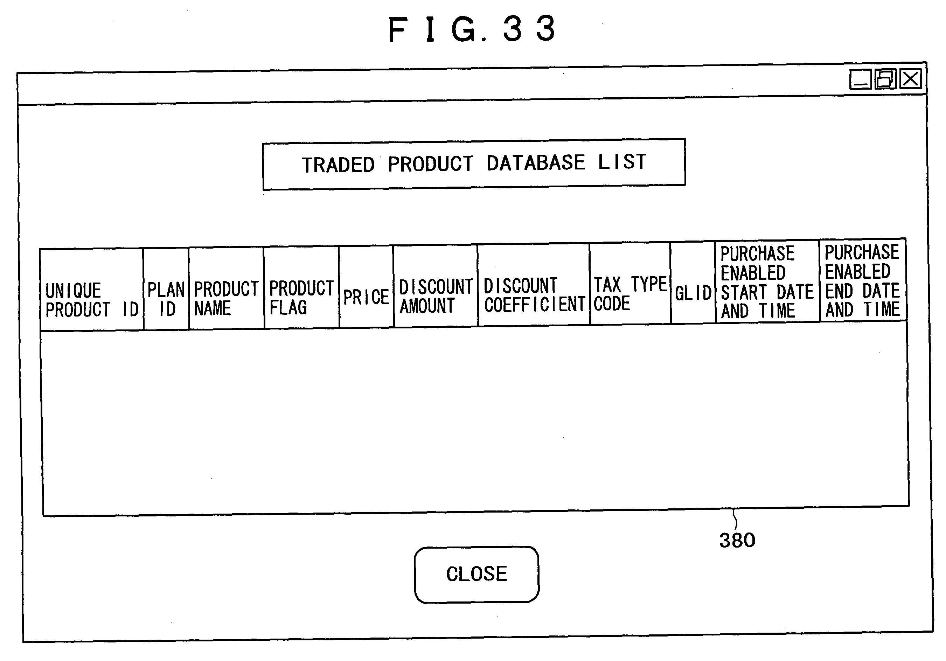

Next, when "List Screen" button of "Relate" screen shown in FIG. 30 is selected through the entry block 73 of the business entity apparatus 7, "Traded Product Database List" shown in FIG. 33 is displayed. FIG. 33 illustrates the outline of the display screen applied to the charging system according to an embodiment of the present invention.

As shown in FIG. 33, "Traded Product Database List" screen is configured by a list 380 having traded product databases. The list 380 is configured by unique product ID, plan ID, product name, product flag, price, discount amount, discount coefficient, tax type code, GLID, purchase enabled start date and time, and purchase enabled end date and time.

In the list 380, unique product ID, plan ID, discount amount, discount coefficient, purchase enabled start date and time, and purchase enabled end date and time are the information stored in the traded product database concerned.

In the list 380, product name, product flag, price, tax type code, and GLID are the information of a product which is identified by unique product ID. This product is registered with the traded product database.

"Traded Product Database List" displayed on the display block 74 allows the merchant 10 to understand the entire situation in which products are related with charge plan information, thereby giving information for making a decision for newly relating products with charging plan information.

In the above-mentioned example, unique product ID is displayed in the list 380 according to the present embodiment. However, the list 380 is not restricted to this configuration. For example, the common product ID issued by the charging apparatus 13 may be displayed on this list.

### Processing of Purchasing Products

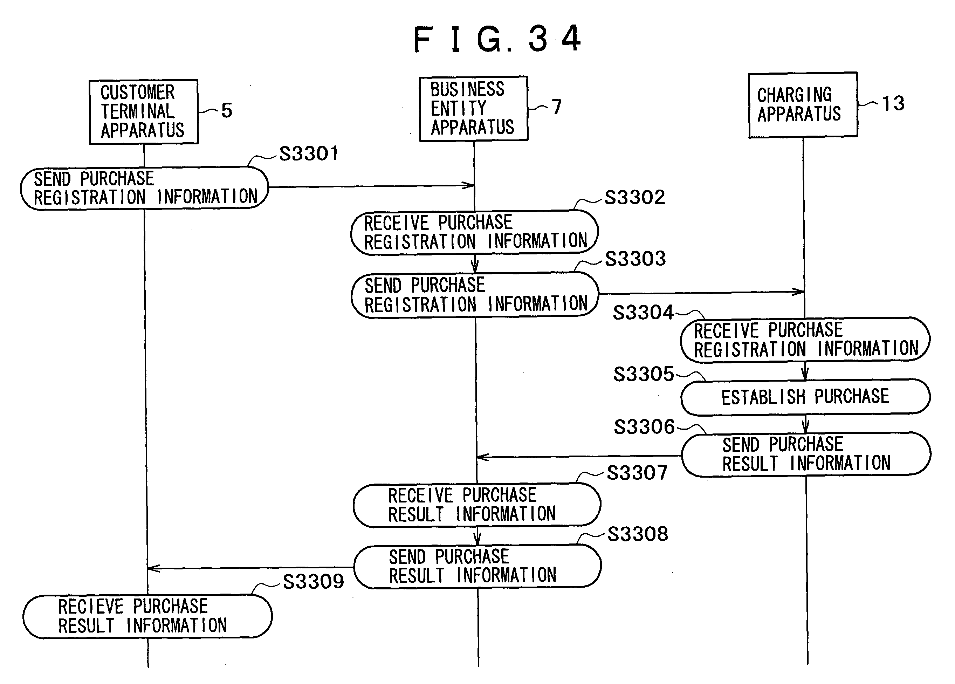

Next, when the traded product data have been stored in the traded product database according to the present embodiment, the customer 9 is ready for purchasing desired products. The following describes the processing of purchasing products according to the present embodiment with reference to FIG. 34. FIG. 34 illustrates a timing flowchart indicative of a schematic operation of purchasing products according to the present embodiment.

First, in order for the customer 9 to purchase products, the customer terminal apparatus 5 of the customer 9 generates purchase registration information. To be more specific, this purchase registration information is generated by the purchase block 57 of the customer terminal apparatus 5.

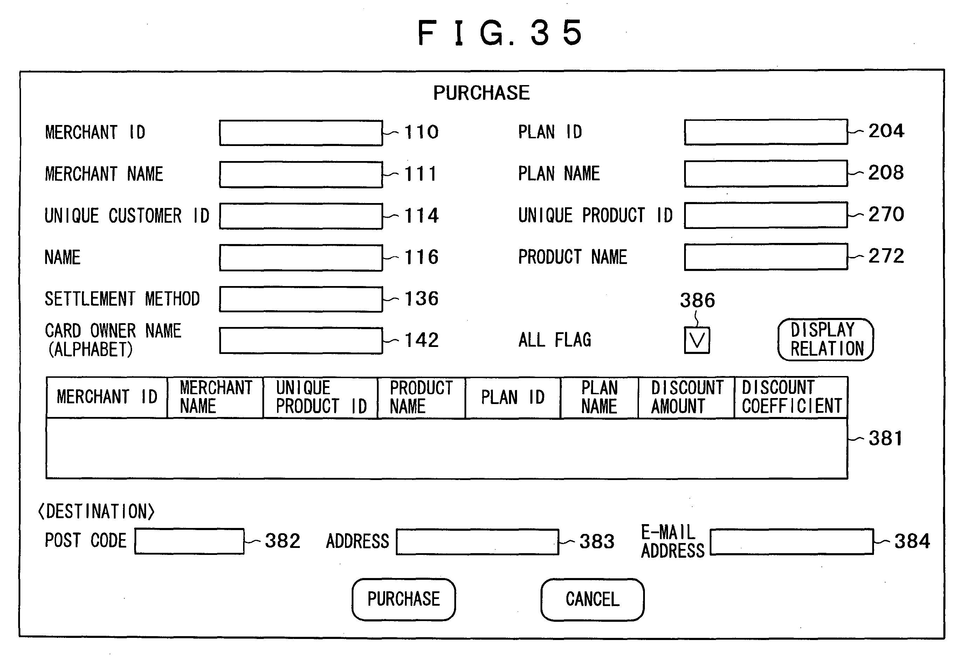

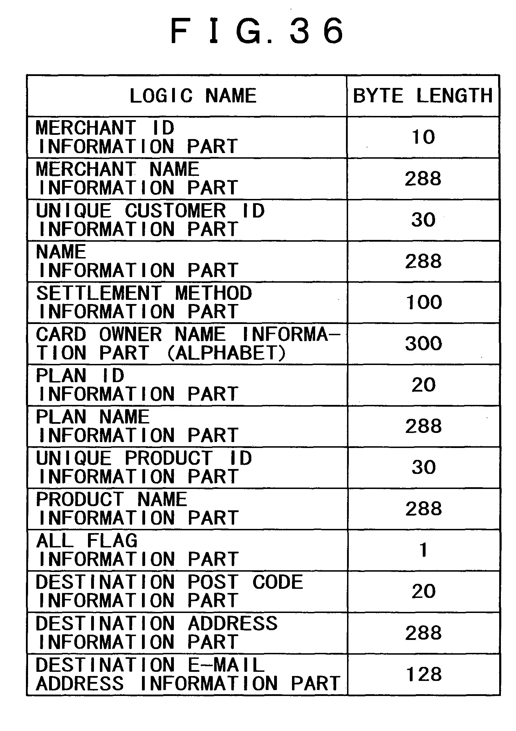

Further, the purchase registration information is generated on the basis of the information entered in the entry blocks of "Purchase" screen displayed on the display block 54 of the customer terminal apparatus 5.
The following describes the purchase registration information according to the present embodiment with reference to FIGS. 35 and 36. FIG. 35 illustrates the outline of the display screen applied to the charging system according to the present embodiment. FIG. 36 illustrates the outline of a data structure of the purchase registration information according to the present embodiment.

As shown in FIG. 35, "Purchase" screen is configured by an entry block 110 for entering merchant ID, an entry block 111 for entering merchant name, an entry block 114 for entering unique customer ID, an entry block 116 for entering name, an entry block 136 for entering settlement method, an entry block 142 for entering card owner name (alphabet), an entry block 204 for entering plan ID, an entry block 208 for entering plan name, an entry block 270 for entering unique product ID, an entry block 272 for entering product name, an entry block 381 for entering related product list, an entry block 382 for entering destination post code, an entry block 383 for entering destination address, an entry block 384 for entering destination e-mail address, and a check box 386 for setting all flag.

It should be noted that the above-mentioned "Purchase" screen is displayed on the display block 54 when "Purchase" item on "Management Menu" shown in FIG. 10 is selected. This selection is made by use of the mouse for example of the input block 53.

Through the input block 53 of the customer terminal apparatus 5, the information is entered in the entry blocks 112 to 384. Further, when "Purchase" button on "Purchase" screen shown in FIG. 35 is selected, the purchase block 57 of the customer terminal apparatus 5 generates the purchase registration information for purchasing products. It should be noted that, if "Cancel" button is selected, "Purchase" screen is switched to "Management Menu" screen without generating the purchase registration information.

In the above-mentioned example, the unique customer ID and unique product ID managed by the merchant 10 are set to "Purchase" screen. However, "Purchase" screen according to embodiments of the present invention is not restricted to this configuration. For example, it is practicable that the common customer ID and command product ID issued by the charging apparatus 13 are set to this screen.

To the entry block 110, merchant ID is set. To the entry block 111, merchant name is set. To the entry block 114, unique customer ID is set. To the entry block 136, a settlement method is set. To the entry block 142, card owner name (alphabet) is set. To the entry block 204, plan ID is set. To the entry block 208, plan name is set. To the entry block 270, unique product ID is set. To the entry block 272, product name is set. To the entry block 382, destination post code is set. To the entry block 383, destination address is set. To the entry block 384, destination e-mail address is set.

It is also practicable if destination post code, destination address, and destination e-mail address are set only when they differ from those registered by the customer 9.

If merchant ID, unique customer ID, plan ID, or unique product ID is not entered, the purchase block 57 can generate the purchase registration information by entering merchant name, name, plan name, or product name.

In the above-mentioned case, the charging apparatus 13 identifies merchant ID, unique customer ID, plan ID, or unique product ID from the merchant name, name, plan name, or product name in the purchase registration information received from the customer terminal apparatus 5.

In the above-mentioned example, card owner name (alphabet) is set to "Purchase" screen according to the present embodiment. However, this screen is not restricted to this configuration. For example, card owner name (Kana character) may be set to this screen.

When "Display Association" button is selected through the input block 53 of the customer terminal apparatus 5, the products related with the charging plan information are all displayed in the related product list 381.

The above-mentioned charging plan information is indicative of the plan ID set to the entry block 204. The products related with the charging plan information are retrieved from the traded product database stored in the product database server 46.

In the related product list 381, merchant ID, merchant name, unique product ID, product name, plan ID, discount amount, and discount coefficient are displayed for each piece of traded product data.

When the check box 386 is checked through the input block 53 with the products related with the related product list 381 all displayed, the customer 9 is ready to purchase all products entered in the input block 270 and displayed in the related product list 381. Namely, the customer 9 can purchase all products related with the charging plan information of the plan ID entered in the entry block 204.

The following describes the purchase registration information according to the present embodiment with reference to FIG. 36. FIG. 36 illustrates the outline of the data structure of the purchase registration information according to the present embodiment.

As shown in FIG. 36, the purchase registration information is configured by at least a 10-byte merchant ID information part, a 288-byte merchant name information part, a 30-byte unique customer ID information part, a 288-byte name information part, 100-byte settlement method information part, a 300-byte card owner name information part, a 20-byte plan ID information part, a 288-byte plan name information part, a 30-byte unique product ID information part, a 288-byte product name information part, a 1-byte all flag information part, a 20-byte destination post code information part, a 288-byte destination address information part, and a 128-byte destination e-mail address information part.

To the merchant ID information part, the merchant ID entered in the entry block 110 is set. To the merchant name information part, the merchant name entered in the entry block 111 is set. To the unique customer ID information part, the unique customer ID entered in the entry block 114 is set. To the name information part, the name entered in the entry block 116 is set. To the settlement method information part, the settlement method entered in the entry block 136 is set. To the plan ID information part, the plan ID entered in the entry block 204 is set. To the plan name information part, the plan name entered in the entry block 208 is set. To the unique product ID information part, the unique product ID entered in the entry block 270 is set. To the product name information part, the product name entered in the entry block 272 is set. To the all flag information block, "1" is set if the check box 386 is checked; "0" is set if the check box 386 is not checked. To the destination post code information part, the destination post code entered in the entry block 382 is set. To the destination address information, the destination address entered in the entry block 383 is set. To the destination e-mail address information part, the destination e-mail address entered in the entry block 384 is set.

When "Purchase" button on "Purchase" screen shown in FIG. 35 is clicked by the mouse for example of the input block 53, the purchase block 57 of the customer terminal apparatus 5 generates purchase registration information.

Next, as shown in FIG. 34, the transmission block 51 of the customer terminal apparatus 5 sends the generated purchase registration information to the business entity apparatus 7 via the network 3 (S3301). The reception block 72 of the business entity apparatus 7 receives this information from the customer terminal apparatus 5 (S3302).

Then, the reception block 52 of the business entity apparatus 7 receives the purchase registration information and sends the received information to the transmission block 51. The transmission block 51 sends the received purchase registration information to the charging apparatus 13 via the network 3 (S3303). It should be noted that, before the transmission from the transmission block 51 (S3303), the business entity apparatus 7 has logged in on the charging apparatus 13.

Next, the reception block 23 of the charging apparatus 13 receives the purchase registration information from the business entity apparatus 7 (S3304). The reception block 23 sends the received information to the purchase establishment server 47.

On the basis of the received purchase registration information, the purchase establishment server 47 generates purchase information. The generated purchase information establishes the purchase of a product by the customer 9 (S3305). It should be noted that, if the all flag information part of the purchase registration information is set to "1" (denoting that all flag is set), the purchase information of all products related with the charging plan information is generated. If the all flag is set, the customer 9 need not set the product ID, thereby enhancing the efficiency of product purchase.

To get the information necessary for the generation of purchase information, the purchase establishment server 47 queries the product database server 46, the charging plan information generation server 33, and the customer database server 41 by use of each information part of the purchase registration information as search keys.

First, on the basis of the merchant ID, unique product ID, and plan ID received from the purchase establishment server 47, the product database server 46 searches the traded product database for the corresponding traded product data and sends the retrieved data to the purchase establishment server 47. It should be noted that, if the all flag information part is set to "1" (denoting that the all flag is set), then, on the basis of the merchant ID and the plan ID, the product database server 46 retrieves all the traded product data concerned and sends the retrieved data to the purchase establishment server 47.

Further, on the basis of the unique product ID for example, the product database server 46 retrieves, from the product database, all records of the products corresponding to the retrieved traded product data and sends these records to the purchase establishment server 47.

Next, on the basis of the merchant ID and plan ID received from the purchase establishment server 47, the charging plan information generation server 33 gets the corresponding charging plan information and sends it to the purchase establishment server 47.

On the basis of the merchant ID, unique customer ID, and settlement method received from the purchase establishment server 47, the customer database server 41 searches the customer database for the corresponding customer profile information and settlement means information and sends the retrieved information to the purchase establishment server 47.

Next, on the basis of the received traded product information, product information, customer profile information, and settlement means information, the purchase establishment server 47 generates purchase information. Further, the purchase establishment server 47 issues a purchase ID and settlement means ID for identifying the purchase information and adds these IDs to the generated purchase information. It should be noted that, if the acquisition of necessary information fails due to an error for example, the purchase information is not generated.

The generated purchase information is stored in the customer database of the customer database server 41, at a location below the customer profile information of the customer 9 concerned.

Further, the purchase establishment server 47 generates purchase result information and sends the generated information to the transmission block 24. The transmission block 24 send the received purchase result information to the business entity apparatus 7 via the network 3 (S3306).

The reception block 72 of the business entity apparatus 7 receives the purchase result information from the charging apparatus 13 via the network 3 (S3307) and sends the received information to the transmission block 71.

The transmission block 71 sends the purchase result information to the customer terminal apparatus 5 via the network 3 (S3308).

The reception block 52 of the customer terminal apparatus 5 receives the purchase result information via the network 3 (S3309). The received purchase result information is displayed on the display block 54.

In the above-mentioned example, the products according to the present embodiment are purchased from the customer terminal apparatus 5, but not exclusively. For example, the purchase may also be made from the business entity apparatus 7.

The following describes the purchase of products from the business entity apparatus 7 according to the present embodiment with reference to FIGS. 34, 37, and 38. The following specifically describes the differences from the purchase from the customer terminal apparatus 5.

As shown in FIG. 34, the business entity apparatus 7 receives the purchase registration information from the customer terminal apparatus 5 (S3302). Upon reception, the business entity apparatus 7 caches the received purchase registration information into the storage block 79 for example without sending to the charging apparatus 13 via the network 3.

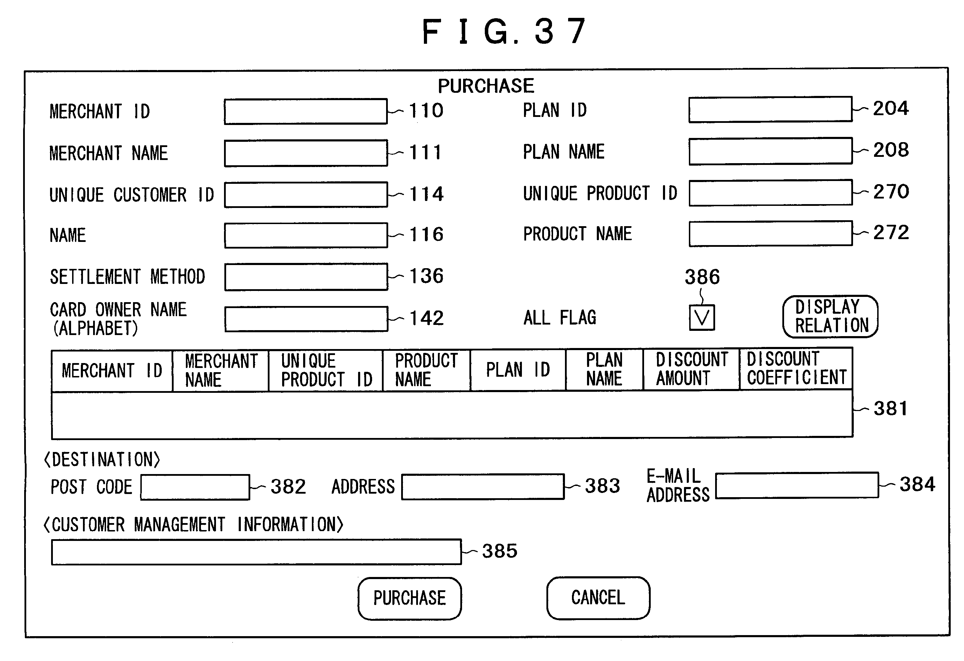

Next, as shown in FIG. 37, "Purchase" screen is displayed on the display block 74 of the business entity apparatus 7. "Purchase" screen shown in FIG. 37 further has an entry block 385 for entering customer management information unlike "Purchase" screen shown in FIG. 35.

Through the input block 73 of the business entity apparatus 7, the customer management information associated with the customer 9 is entered in the entry block 385. Therefore, the business entity apparatus 7 can attach the customer management information entered in the entry block 385 to the purchase registration information before generating the same.

In the above-mentioned example, the customer management information according to the present embodiment is non-formatted text. However, this information is not restricted to this configuration. For example, the customer management information may be a formatted text, image, or audio information.

In the above-mentioned example, the customer management information according to the present embodiment is set from "Purchase" screen. However the customer management information is not restricted to this configuration. For example, the customer management information may also be set from "Customer Registration" screen.

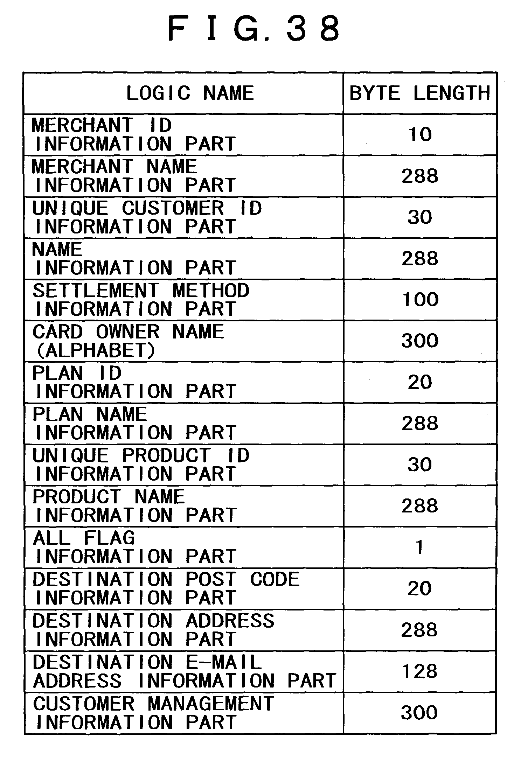

The data structure of the purchase registration information attached with customer management information shown in FIG. 38 differs from the purchase registration information shown in FIG. 36 in that the information shown in FIG. 38 has customer management information part.

It should be noted that the byte length of the customer management information part according to the present embodiment is 300 bytes. However, the byte length is not restricted to this configuration. For example, the byte length may be variable in accordance with the data capacity of the customer management information.

The business entity apparatus 7 can repeatedly edit (change or delete, for example) the customer management information stored in the customer database of the charging apparatus 13 whenever desired.

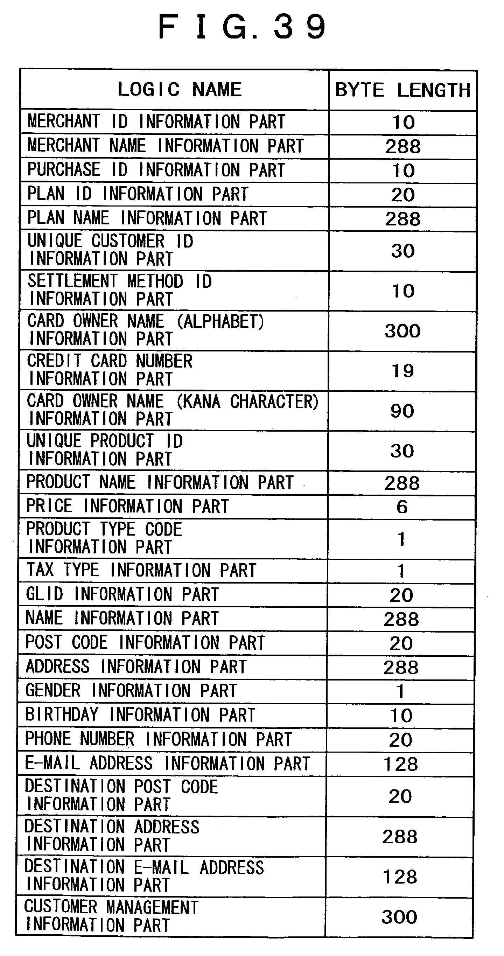

The following describes the purchase information according to the present embodiment with reference to FIG. 39. FIG. 39 illustrates the outline of the data structure of the purchase information according to the present embodiment.

As shown in FIG. 39, the purchase information is configured at least of a 10-byte merchant ID information part, a 288-byte merchant name information part, a 10-byte purchase ID information part, a 20-byte plan ID information part, 288-byte plan name information part, a 30-byte unique customer ID information part, a 30-byte unique product ID information part, a 288-byte product name information part, a 6-byte price information part, a 1-byte product type code information part, a 1-byte tax type code information part, a 20-byte GLID information part, a 288-byte name information part, a 20-byte post code information part, a 288-byte address information part, a 1-byte gender information part, a 10-byte birthday information part, a 20-byte phone number information part, a 128-byte e-mail address information part, a 20-byte destination post code information part, a 288-byte destination address information part, a 128-byte destination e-mail address information part, and 300-byte customer management information part.

It should be noted that, if the customer management information is not set by the business entity apparatus 7, the customer management information part is not included in the purchase information. It is also practicable for the purchase information according to the present embodiment to have more information parts than mentioned above and therefore the purchase information is not restricted to the above-mentioned configuration.

In the above-mentioned example, the customer management information according to the present embodiment is set by the business entity apparatus 7. However, the setting of the customer management information is not restricted to this configuration. For example, the customer management information may also be set from the customer terminal apparatus 5.

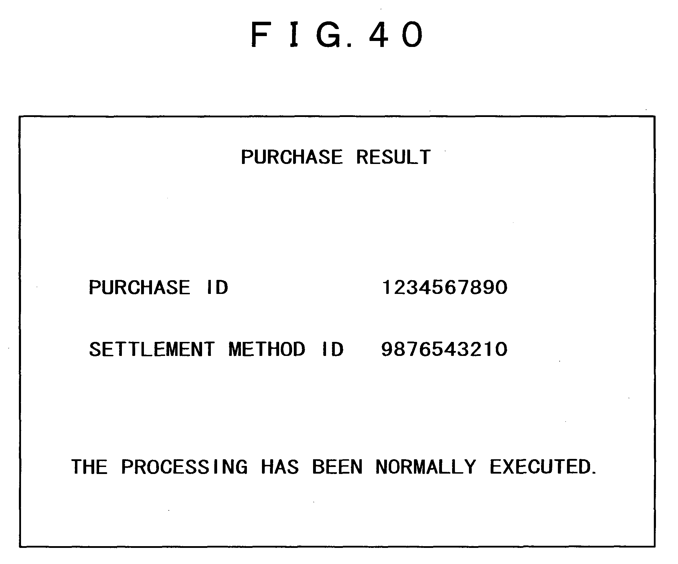

The following describes "Purchase Result" screen according to the present embodiment with reference to FIG. 40. FIG. 40 illustrates a schematic configuration of "Purchase Result" screen applied to the charging system according to the present embodiment.

As shown in FIG. 40, "Purchase Result" screen is displayed on the display block 54 of the customer terminal apparatus 5 or the display block 74 of the business entity apparatus 7 on the basis of the purchase result information.

"Purchase Result" screen shows purchase ID issued by generating purchase information and settlement means ID for charging settlement of each purchased product. It should be noted that, if the purchase information is not normally generated, an error message is shown on "Purchase Result" screen.

### Generation of Vouchers

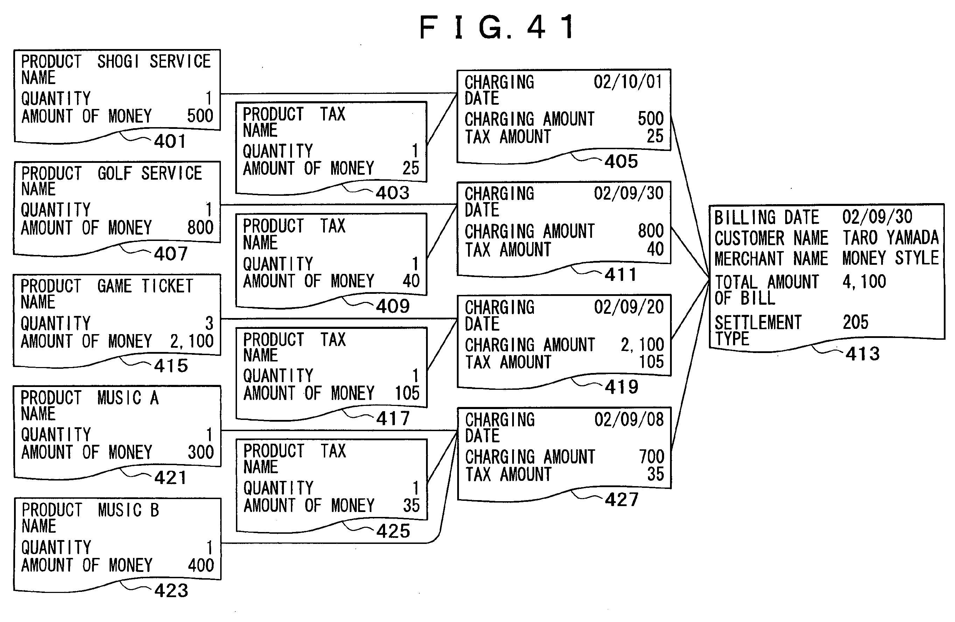

The following describes the vouchers according to the present embodiment with reference to FIG. 41. FIG. 41 illustrates the outline of the vouchers to be generated according to the present embodiment.

As shown in FIG. 41, the vouchers according to the present embodiment are configured by charging vouchers and billing vouchers for example. These vouchers are generated, after the purchase of products, at predetermined time intervals at the times of charging and billing defined in the charging plan information.

At the time of charging, the voucher generation server 32 executes charging processing on the basis of purchase information, thereby generating charging information. From the generated charging information, the voucher generation server 32 generates charging voucher information for each transaction. The charging information is the minimum unit of sale to the customer 9 and includes product or tax for example.

By outputting the output block, not shown, of the business entity apparatus 7, the charging voucher information is outputted as charging vouchers. Checking the outputted charging vouchers, the merchant 10 can make confirmation whether the charging processing is properly executed.

Further, by aggregating the charging voucher information for each customer 9, the voucher generation server 32 generates billing voucher information. Like the charging vouchers, the billing voucher information can be sent to the customer 9 by outputting it to the output block, not shown, of the business entity apparatus 7.

The generated billing voucher information is sent to the settlement server 37. On the basis of the received billing voucher information, the settlement server 37 executes settlement processing.

As shown in FIG. 41, billing voucher information 413 for the customer 9 is configured by charging voucher information 405, charging voucher information 411, charging voucher information 419, and charging voucher information 427. Billing voucher information 413 is generated for each unique customer ID or each charging customer ID.

Generating the billing voucher information for each charging customer ID allows to generate the billing voucher information 413 for each merchant 10 in the case where the customer 9 is registered with a plurality of merchants 10 and in the case of the same unique customer ID (or the uniform customer ID).

Consequently, on the basis of the billing voucher information 413 of each merchant 10, the settlement server 37 can execute the settlement processing on the customer 9 for each merchant 10.

The charging voucher 405 is configured by charging information 401 and charging information 403. The charging voucher 411 is configured by charging information 407 and charging information 409. The charging voucher information 419 is configured by charging information 415 and charging information 417.
The charging voucher information 427 is configured by charging information 421, charging information 423, and charging information 425.

In the above-mentioned examples, the information is displayed on the display block 74 of the business entity apparatus 7 in each processing operation of the charging system according to the present embodiment. However, the display processing is not restricted to this configuration. For example, it is also practicable for the information to be displayed on the display block 54 of the customer terminal apparatus 5. In this case, operations such as customer registration can be executed from the customer terminal apparatus 5.

As described above, relating various pieces of charging plan information with one product allows the selection of the charging plan information that suits the needs of customers. This novel configuration helps promote the sale of products.

Further, relating the charging plan information with products allows the preparation of charging plan information in various manners, thereby efficiently providing products without newly generating the charging plan information suitable for products.

Sharing charging plan information among the merchants 10 enhances the competition of products between the merchants 10, thereby generating better charging plan information. It is also practicable to collect royalties every time the charging plan information is used, thereby increasing the profits of the merchant 10.

Since the customer management information necessary for customer sale promotions can be managed in an integrated manner without being managed by the business entity apparatus 7, the operation cost of the business entity apparatus 7 is reduced. Further, sharing the customer management information among the merchants 10 allows the efficient marketing strategies for stimulating the demands of the customers 9. Royalties can be collected every time the customer management information is used.

If one or more merchants 10 are recorded together in consolidated accounting for example, the parental merchant 10 can set the relation information between two or more merchants 10 in accordance with the purpose of totalization of taxes or sale amounts.

Setting the relation information allows the collective totalization of taxes, charges, or sale amounts which have occurred on merchants 10. It also allows to record the results of the totalization to the sale amounts of the parental merchant 10. Consequently, this novel configuration allows the efficient execution of totalization processing in accordance with purposes of totalization.

Setting the relation information in unit of billing customers, in unit of sale, or in unit of found settlement, for example, allows the charging settlement in accordance with the operation mode of the merchant 10. Consequently, this novel configuration can cope with the change or streamlining of the operation mode or the merchant 10.

While the preferred embodiments of the present invention have been described using specific terms, such description is for illustrative purposes only, and it is to be understood that changes and variations may be made without departing from the spirit or scope of the appended claims.

In the above-mentioned embodiments, the unique customer ID which differs from one merchant to another for the same customer is used by way of example. However, the present invention is not restricted to this configuration. For example, the same unique customer ID (or the uniform customer ID) may also be used regardless of the merchants 10.

In the above-mentioned embodiments, the business entity apparatus 7 accesses the charging apparatus 13. However, the present invention is not restricted to this configuration. For example, it is also practicable that the customer terminal apparatus 5 accesses the charging apparatus 13.

As described and according to embodiments of the invention, products and charging information can be separated from each other to manage various types of charging information. Consequently, the charging information suitable for each product can be selected, thereby registering the products efficiently.

Embodiments of the present invention provide a charging system, a charging apparatus, a computer program, a customer terminal apparatus and a charging method. The charging system includes a business entity apparatus for providing a product, a customer terminal apparatus for receiving the provision of the product, and a charging apparatus for executing charging processing on the customer terminal apparatus on behalf of the business entity apparatus. These apparatuses are each connected to a network. The charging apparatus includes charging plan information generation means, relating means, and charging means. The charging plan information generation means includes a charging plan template. The charging plan information generation means sets charging parameter information. The charging plan information generation means generates charging plan information from the charging plan template and the charging parameter information. The relating means relates the charging plan information with the product. The charging means executes charging processing on the customer terminal apparatus for the product.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A charging system in which a business entity apparatus on the side of business entity for providing a product, a customer terminal apparatus on the side of a customer for receiving the provision of said product, and a charging apparatus for executing charging processing on said customer terminal apparatus on behalf of said business entity apparatus are each connected to a network, said charging apparatus comprising:
charging plan information generation means having a charging plan template including charging type information for indicating the type of the charge, billing timing information for indicating the timing for billing the charge, and charging cycle information for indicating the cycle of the charge, said charging plan information generation means setting charging parameter information configured by a combination of said charging type information, said billing timing information, and said charging cycle information to generate charging plan information from said charging plan template and said charging parameter information;
relating means for relating said charging plan information with said product as instructed by said business entity apparatus; and
charging means for executing charging processing on said customer terminal apparatus for said product on the basis of said charging plan information related with said product.

2. A charging apparatus connected via a network to a business entity apparatus on the side of a business entity for providing a product and a customer terminal apparatus on the side of a customer for receiving the provision of said product to charge said customer terminal apparatus on behalf of said business entity apparatus, said charging apparatus comprising:
charging template storage means for storing a charging plan template including charging type information for indicating the type of the charge, billing timing information for indicating the timing for billing the charge, and charging cycle information for indicating the cycle of the charge;
charging plan information generating means for setting, as instructed by said business entity apparatus, charging parameter information configured by a combination of said charging type information, said billing timing information, and said charging cycle information to generate charging plan information from said charging plan template and said charging parameter information;
relating means for relating said charging plan information with said product as instructed by said business entity apparatus; and
charging means for executing charging processing on said customer terminal apparatus for said product on the basis of said charging plan information related with said product.

3. The charging apparatus according to claim 2, wherein said charging type information is configured by at least one of one-time rate type charging information and flat-rate type charging information.

4. The charging apparatus according to claim 2, wherein said billing timing information is configured by at least one of pre-charging information for billing before the provision of said product and post-charging information for billing after the provision of said product.

5. The charging apparatus according to claim 2, wherein said charging cycle information is configured by at least one of yearly charging information for charging once a year and monthly charging information for charging once a month.

6. The charging apparatus according to claim 2, wherein said relating means relates a plurality of products with said charging plan information.

7. The charging apparatus according to claim 2, wherein said relating means relates a plurality of pieces of charging plan information with said product.

8. A computer program for making a computer function as a charging apparatus connected via a network to a business entity apparatus on the side of a business entity for providing a product and a customer terminal apparatus on the side of a customer for receiving the provision of said product to charge said customer terminal apparatus on behalf of said business entity apparatus, comprising the steps of:
setting, as instructed by said business entity apparatus, charging parameter information configured by a combination of charging type information for indicating the type of the charge, billing timing information for indicating the timing for billing the charge, and charging cycle information for indicating the cycle of the charge;
generating charging plan information from a stored charging plan template and said charging parameter information, said charging plan template including said charging type information, said billing timing information, and said charging cycle information;
relating said charging plan information with said product as instructed by said business entity apparatus; and
executing charging processing on said customer terminal apparatus on the basis of said charging plan information related with said product.

9. A customer terminal apparatus connected to a business entity apparatus on the side of a business entity for providing products and a charging apparatus for executing charging on behalf of said business entity apparatus, said customer apparatus being charged by said charging apparatus for the purchase of said products, said customer terminal apparatus comprising:
purchase means for collectively selecting all of said products related, as instructed by said business entity apparatus, with charging plan information generated by said charging apparatus from a charging plan template including charging type information for indicating the type of the charge, billing timing information for indicating the timing for billing the charge, and charging cycle information for indicating the cycle of the charge and charging parameter information configured by a combination of said charging type information, said billing timing information, and said charging cycle information which are set as instructed by said business entity apparatus and purchasing said selected products.

10. A charging method for a charging apparatus connected via a network to a business entity apparatus for providing a product and a customer terminal apparatus for receiving the provision of said product, said charging apparatus executing charging processing on said customer terminal apparatus on behalf of said business entity apparatus, said charging method comprising the steps of:
setting, as instructed by said business entity apparatus, charging parameter information configured by a combination of charging type information for indicating the type of the charge, billing timing information for indicating the timing for billing the charge, and charging cycle information for indicating the cycle of the charge;
generating charging plan information from a stored charging plan template and said charging parameter information, said charging plan template including said charging type information, said billing timing information, and said charging cycle information;
relating said charging plan information with said product as instructed by said business entity apparatus; and
executing charging processing on said customer terminal apparatus on the basis of said charging plan information related with said product.

11. The charging method according to claim 10, wherein said charging type information is configured by at least one of one-time rate type charging information and flat-rate type charging information.

12. The charging method according to claim 10, wherein said billing timing information is configured by at least one of pre-charging information for billing before the provision of said product and post-charging information for billing after the provision of said product.

13. The charging method according to claim 10, wherein said charging cycle information is configured by at least one of yearly charging information for charging once a year and monthly charging information for charging once a month.

14. The charging method according to claim 10, wherein said relating step relates a plurality of products with said charging plan information.

15. The charging method according to claim 10, wherein said relating step relates a plurality of pieces of charging plan information with said product.
